# EUROPEAN PATENT APPLICATION

(11) **EP 4 549 074 A1**
(43) Date of publication of application: **07.05.2025**
(21) Application number: 23842708.2
(22) Date of filing: 08.06.2023
(51) Int. Cl.: B23K 20/12

(54) **METHOD FOR MANUFACTURING JOINED BODY**

(30) Priority: 20.07.2022 JP 2022115434
(71) Applicant: Nippon Light Metal Company, Ltd., Tokyo 105-0004 (JP)
(72) Inventor: SEO, Nobushiro, Shizuoka-shi, Shizuoka 421-3203 (JP); KOIZUMI, Shingo, Shizuoka-shi, Shizuoka 421-3203 (JP); KUMAI, Masaaki, Kaizuka-shi, Osaka 597-0092 (JP); KIKU, Kazuo, Kaizuka-shi, Osaka 597-0092 (JP)
(74) Representative: Kiwit, Benedikt
(86) International application number: PCT/JP2023/021293
(87) International publication number: WO 2024/018776

(57) **Abstract**

Provided is a method for manufacturing a joined body by performing friction stir welding on a joined member while using a rotating tool (F) including a stirring pin (F2) in which a helical groove is formed, the method comprising, in the following order: an insertion step of inserting the stirring pin (F2) into the joined member in a state where the rotating tool (F) is rotated in the same direction as a formation direction of the helical groove; a change step of changing a rotation direction of the rotating tool (F) such that the rotating tool (F) is rotated in an opposite direction to the formation direction of the helical groove; and a joining step of joining the joined member in a state where the rotating tool (F) is rotated in the opposite direction to the formation direction of the helical groove.

## Description

### TECHNICAL FIELD

The present invention relates to a method for manufacturing a joined body.

### BACKGROUND ART

There is known a method for manufacturing a joined body by performing friction stir welding on a joined member while using a rotating tool including a stirring pin in which a helical groove is formed.

When the helical groove is formed as a left-handed helix (left-handed screw) in a direction from a base end toward a distal end, the friction stir welding is normally performed by rotating the rotating tool rightward to insert the stirring pin into the joined member. Meanwhile, when the helical groove is formed as a right-handed helix (right-handed screw) in the direction from the base end toward the distal end, the friction stir welding is performed by rotating the rotating tool leftward to insert the stirring pin into the joined member. Specifically, the friction stir welding is performed by rotating the rotating tool in the opposite direction to a formation direction of the helical groove (hereinafter, this form is referred to as "forward rotation") to insert the stirring pin into the joined member (Patent Literature 1).

Performing the friction stir welding in the forward rotation allows the material of the joined member plasticized and fluidized to be guided to the distal end side of the stirring pin. The plastic flow around the distal end portion thereby increases, and this allows joining in a deep portion of a joining portion to be stably performed, and a strong joining portion can be formed. Moreover, an amount of metal overflowing to the outside of the joined member can be reduced.

Moreover, there has been conventionally performed friction stir welding in which the rotating tool is rotated in the same direction as the formation direction of the helical groove (hereinafter, this form is referred to as "reverse rotation") to insert the stirring pin into the joined member (Patent Literature 2).

### CITATION LIST

### Patent Literature

Patent Literature 1: JP10-249551A
Patent Literature 2: JP2002-035962A

### SUMMARY OF INVENTION

### Technical Problem

When the friction stir welding is performed by performing the forward rotation (the rotation direction of the rotating tool is opposite to the formation direction of the helical groove) as described in Patent Literature 1, the plastic flow of the joined member is caused by the contact of the stirring pin and the joined member, and the material of the joined member plasticized and fluidized overflows to the outside of the joined member depending on the volume of the stirring pin with the inserting of the stirring pin. This friction stir welding has such a problem that solidification of the overflowing material of the joined member plasticized and fluidized as described above generates a large burr on a front surface of the joined member after the joining.

Moreover, when the friction stir welding is performed in the forward rotation, the friction stirring is performed while the material of the joined member plasticized and fluidized is pressed toward the distal end side of the stirring pin. Accordingly, load on a joining apparatus that rotates the rotating tool may increase. Furthermore, when the hardness of the joined member is relatively high, the rotating tool may break. Moreover, when the friction stir welding is performed by inserting the stirring pin in the forward rotation in a state where two joined members are laid one on top of the other, convection of the materials of the joined members plasticized and fluidized occurs. This causes oxidization coating of the joined members present on an overlaying surface (overlaying portion) to be taken in and move upward, and a defect occurs in the joining portion in some cases.

Meanwhile, it is said that, when the friction stir welding is performed by performing the reverse rotation (the formation direction of the helical groove and the rotation direction of the rotating tool are the same) as described in Patent Literature 2, excessive upward convection and taking-in of the interface that occur in a region plasticized and fluidized can be suppressed. However, in this case, the material is insufficient at a position on the distal end side of the stirring pin, and a defect occurs in an interior in some cases.

From above-mentioned viewpoints, an object of the present invention is to provide a method for manufacturing a joined body that suppress occurrence of a burr and occurrence of a defect in a joining portion while reducing load applied to a rotating tool and a joining apparatus.

### Solution to Problem

The present invention to solve the above problem provides a method for manufacturing a joined body by performing friction stir welding on a joined member while using a rotating tool including a stirring pin in which a helical groove is formed, the method comprising, in the following order: an insertion step of inserting the stirring pin into the joined member in a state where the rotating tool is rotated in the same direction as a formation direction of the helical groove; a change step of changing a rotation direction of the rotating tool such that the rotating tool is rotated in an opposite direction to the formation direction of the helical groove; and a joining step of joining the joined member in a state where the rotating tool is rotated in the opposite direction to the formation direction of the helical groove.

Preferably, the number of revolutions of the rotating tool in the insertion step is equal to or higher than the number of revolutions of the rotating tool in the joining step.

Preferably, a relationship between the number N1 of revolutions of the rotating tool in the insertion step and the number N2 of revolutions of the rotating tool in the joining step is N2≤N1≤N2×5.

Preferably, the method further comprises a lifting step of lifting the rotating tool in a front surface direction of the joined member after the insertion step, the change step is performed after the lifting step.

Preferably, a relationship between an insertion depth H1 of the rotating tool in the insertion step and a lifting amount H2 in the lifting step is H1×0.01≤H2≤H1×0.5.

Preferably, the method further comprises a press-in step of pressing the rotating tool in a depth direction of the joined member after the change step, the joining step is performed after the press-in step.

Preferably, a relationship between an insertion depth H1 of the rotating tool in the insertion step and an insertion amount H3 in the press-in step is H1 ×0.01≤H3≤H1×0.5.

Preferably, a relationship between an insertion depth H1 of the rotating tool in the insertion step and an insertion depth H4 at start of joining in the joining step is H1×1.01≤H4≤H1×1.5.

Preferably, the rotating tool further includes a shoulder portion that is provided with a lower end surface with a flat shape or a mortar shape and that has a column shape or a frustum shape, the stirring pin extends downward from the lower end surface of the shoulder portion, and the friction stir welding on the joined member is performed in a state where the shoulder portion is brought into contact with the joined member and the stirring pin is inserted into the joined member.

Preferably, a relationship between an insertion depth H1 of the rotating tool in the insertion step and a length L1 of the stirring pin is L1×0.5≤H1≤L1.

Preferably, the rotating tool includes a base portion with a column shape or a frustum shape, the stirring pin extends downward from a lower end surface of the base portion, and the friction stir welding is performed on the joined member in a state where the base portion is separated from the joined member and only the stirring pin is inserted into the joined member.

Preferably, the rotating tool includes a base portion with a column shape or a frustum shape, the stirring pin includes a base-end-side pin continuous with the base portion and a distal-end-side pin continuous with the base-end-side pin, a taper angle of the base-end-side pin is larger than a taper angle of the distal-end-side pin, and a pin step portion with a step shape is formed on an outer peripheral surface of the base-end-side pin, and the friction stir welding on the joined member is performed in a state where the outer peripheral surface of the base-end-side pin is in contact with a front surface of the joined member.

Preferably, the method further comprises a prepared hole forming step of forming a prepared hole in the joined member before the insertion step, the stirring pin is inserted into the prepared hole in the insertion step.

Preferably, the joined member includes a first joined member and a second joined member with a lower hardness than the first joined member, an end surface of at least one of the first joined member and the second joined member is made to butt to form a butting portion, or a back surface of the second joined member is laid over a front surface of the first joined member to form an overlaying portion, the stirring pin is inserted from the front surface of the first joined member in the insertion step, and the friction stir welding of the butting portion or the overlaying portion is performed in the joining step.

Preferably, the joined member includes a first joined member and a second joined member, an end surface of at least one of the first joined member and the second joined member is made to butt to form a butting portion, or a back surface of the second joined member is laid over a front surface of the first joined member to form an overlaying portion, and the stirring pin is inserted toward the butting portion or the overlaying portion in the insertion step.

### Advantageous Effects of Invention

The method for manufacturing the joined body according to the present invention can suppress occurrence of a burr and occurrence of a defect in a joining portion while reducing load applied to the rotating tool and the joining apparatus.

### BRIEF DESCRIPTION OF DRAWINGS

FIG. 1 is an exploded perspective view showing a joined body according to a first embodiment of the present invention.
FIG. 2 is a cross-sectional view showing a butting step in a method for manufacturing the joined body according to the first embodiment.
FIG. 3 is a plan view showing the butting step in the method for manufacturing the joined body according to the first embodiment.
FIG. 4 is a side view showing a rotating tool used in the method for manufacturing the joined body according to the first embodiment.
FIG. 5 is a cross-sectional view showing an insertion step in the method for manufacturing the joined body according to the first embodiment.
FIG. 6 is a cross-sectional view showing a lifting step in the method for manufacturing the joined body according to the first embodiment.
FIG. 7 is a cross-sectional view showing a change step in the method for manufacturing the joined body according to the first embodiment.
FIG. 8 is a cross-sectional view showing a press-in step in the method for manufacturing the joined body according to the first embodiment.
FIG. 9 is a cross-sectional view showing a joining step in the method for manufacturing the joined body according to the first embodiment.
FIG. 10 is a cross-sectional view showing a prepared hole forming step according to a first modified example of the first embodiment.
FIG. 11 is a cross-sectional view showing an insertion step according to a second modified example of the first embodiment.
FIG. 12 is a cross-sectional view showing a joining step according to the second modified example of the first embodiment.
FIG. 13 is a cross-sectional view showing an insertion step according to a third modified example of the first embodiment.
FIG. 14 is an enlarged view showing a rotating tool according to the third modified example of the first embodiment.
FIG. 15 is a cross-sectional view showing a joining step according to the third modified example of the first embodiment.
FIG. 16 is a plan view showing a butting step according to a fourth modified example of the first embodiment.
FIG. 17 is a cross-sectional view showing an insertion step according to the fourth modified example of the first embodiment.
FIG. 18 is an exploded perspective view showing a joined body according to a second embodiment.
FIG. 19 is a cross-sectional view showing an overlaying step according to the second embodiment.
FIG. 20 is a plan view showing the overlaying step according to the second embodiment.
FIG. 21 is a cross-sectional view showing an insertion step according to the second embodiment.
FIG. 22 is a cross-sectional view showing an insertion step according to a first modified example of the second embodiment.
FIG. 23 is a table showing conditions of a shape and a rotation direction of the rotating tool and the number of revolutions of the tool in Test 1 and Test 2.
FIG. 24 is a table showing a movement speed, an insertion depth, a lifting amount and an insertion amount, an evaluation, and an alloy type in Test 1 and Test 2.
FIG. 25 is a plan view showing a friction stir state of Test Example 11.
FIG. 26 is a cross-sectional view along the XXVI-XXVI line in FIG. 25.
FIG. 27 is a plan view showing a friction stir state of Comparative Test Example 11.
FIG. 28 is a cross-sectional view along the XXVIII-XXVIII line in FIG. 27.
FIG. 29 is a plan view showing a friction stir state of Comparative Test Example 12.
FIG. 30 is an enlarged plan view at a start position in FIG. 29.
FIG. 31 is a cross-sectional view along the XXXI-XXXI line in FIG. 29.
FIG. 32 is a plan view showing a friction stir state of Comparative Test Example 13.
FIG. 33 is an enlarged plan view at a start position in FIG. 32.
FIG. 34 is a cross-sectional view along the XXXIV-XXXIV line in FIG. 32.
FIG. 35 is a plan view showing a friction stir state of Test Example 21.
FIG. 36 is an enlarged plan view at a start position in FIG. 35.
FIG. 37 is a plan view showing a friction stir state of Test Example 22.
FIG. 38 is an enlarged plan view at a start position in FIG. 37.
FIG. 39 is a cross-sectional view along the XXXIX-XXXIX line in FIG. 37.
FIG. 40 is a plan view showing a friction stir state of Comparative Test Example 21.
FIG. 41 is an enlarged plan view at a start position in FIG. 40.
FIG. 42 is a plan view showing a friction stir state of Comparative Test Example 22.
FIG. 43 is an enlarged plan view at a start position in FIG. 42.
FIG. 44 is a cross-sectional view along the XXXXIV-XXXXIV line in FIG. 42.

### DESCRIPTION OF EMBODIMENTS

Embodiments of the present invention is explained with reference to the drawings as appropriate. The present invention is not limited only to the embodiments described below. Moreover, some or all of constitutional elements in the embodiments and modified examples may be combined as appropriate.

### [1. First Embodiment]

### [1-1. Joined Members and Joined Body]

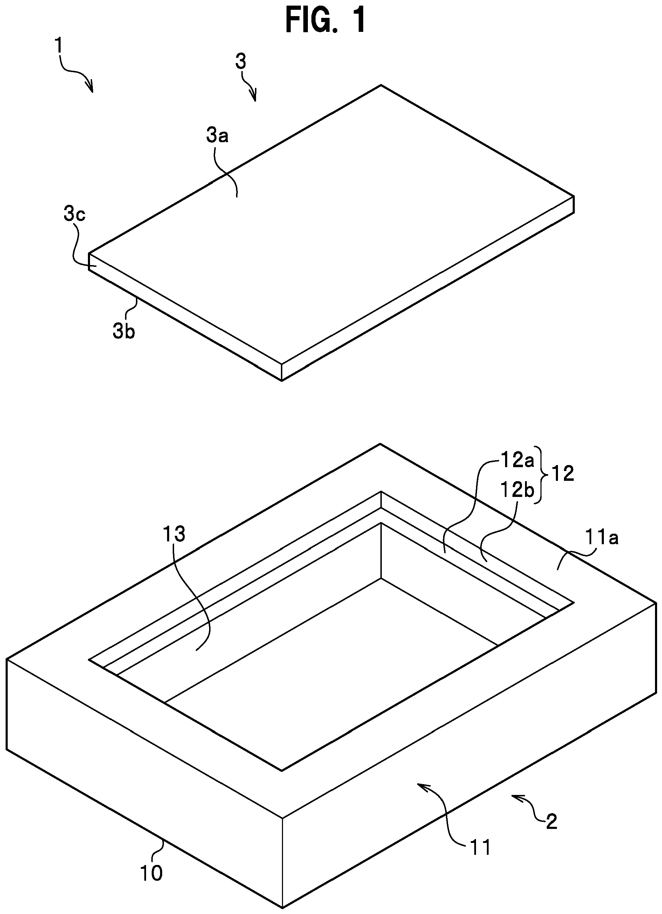

A liquid-cooling jacket (joined body) 1 according to a first embodiment of the present invention is formed of a jacket main body (first joined member) 2 and a sealing body (second joined member) 3 as shown in FIG. 1. The liquid-cooling jacket 1 is a device that cools an installed heat generating body by allowing a fluid to flow inside the liquid-cooling jacket 1. The jacket main body 2 and the sealing body 3 are integrated by friction stir welding. In the following explanation, "front surface" means a surface on the opposite side to "back surface".

The jacket main body (first joined member) 2 is formed mainly of a bottom portion 10 and a peripheral wall portion 11. The jacket main body 2 is not limited to a particular material as long as the material is a metal that can be subjected to friction stirring, and is formed to mainly contain a first aluminum alloy in the present embodiment. For example, an aluminum alloy casting material such as JISH5302 ADC12 (Al-Si-Cu based) is used as the first aluminum alloy.

The bottom portion 10 is a plate-shaped member having a rectangular shape. The peripheral wall portion 11 is a wall portion standing upright from a peripheral edge portion of the bottom portion 10, in a rectangular frame shape. The bottom portion 10 and the peripheral wall portion 11 form a recess portion 13 opened on the upper side. A peripheral wall step portion 12 is formed at an inner peripheral edge of the peripheral wall portion 11. The peripheral wall step portion 12 is formed of a step bottom surface 12a and a step side surface (side surface) 12b that perpendicularly stands upright from the step bottom surface 12a.

Note that, although the jacket main body 2 of the present embodiment is integrally formed, for example, the peripheral wall portion 11 may have a divided configuration and be integrated by being joined by a sealing member.

The sealing body (second joined member) 3 is a plate-shaped member that seals an opening portion of the jacket main body 2. The sealing body 3 is not limited to a particular material as long as the material is a metal that can be subjected to friction stirring, and is formed to mainly contain a second aluminum alloy in the present embodiment. The second aluminum alloy is a material with a lower hardness than the first aluminum alloy. The second aluminum alloy is made of, for example, an aluminum alloy wrought material such as JIS A1050, A1070, A1100, or A6063.

### [1-2. Manufacturing Method]

Next, explanation is given of a method for manufacturing the liquid-cooled jacket (method for manufacturing the joined body, method for joining the joined members) (hereinafter, referred to as "present method" in some cases) according to the present embodiment. In the method for manufacturing the liquid-cooled jacket according to the present embodiment, a preparation step, a butting step, an insertion step, a lifting step, a change step, a press-in step, and a joining step are performed.

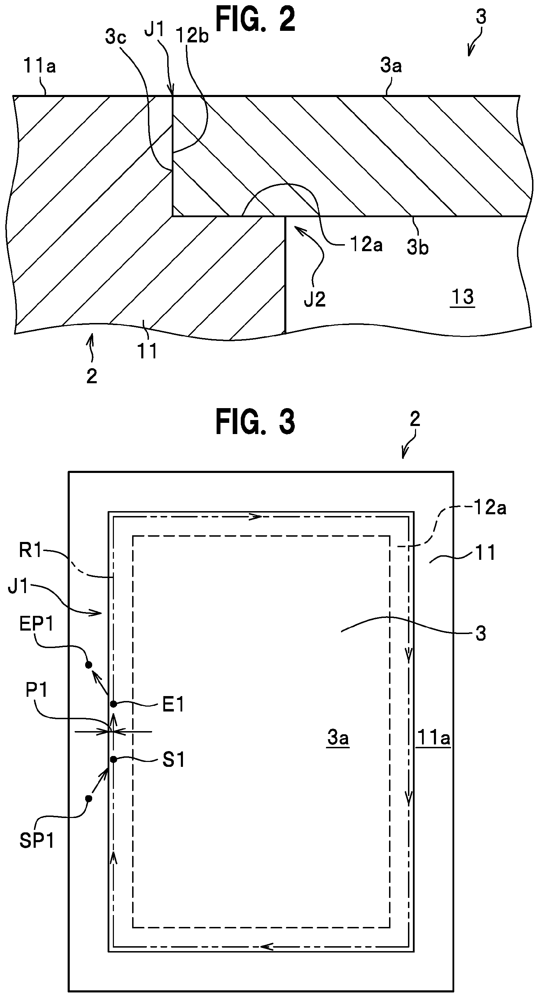

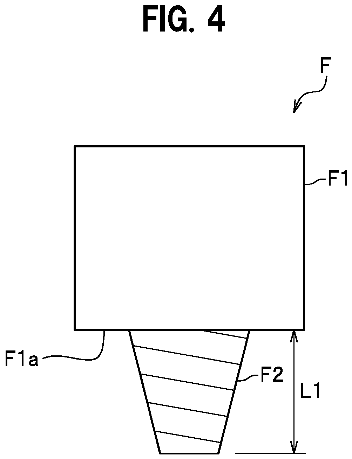

In the present method, as shown in FIG. 2, the friction stir welding of the jacket main body 2 and the sealing body 3 is performed in a state where the sealing body 3 is placed on the jacket main body 2 and side surfaces thereof butt against each other. As shown in FIG. 3, in the present method, a start position SP1 and an end position EP1 are set on an end surface 11a of the peripheral wall portion 11, and an intermediate position S1 and an intermediate position E1 are set on a front surface 3a of the sealing body 3. As shown in FIG. 3, a movement route R1 through which a rotating axis C of a rotating tool F (see FIG. 4) of the present embodiment travels passes the start position SP1, the intermediate position S1, the intermediate position E1, and the end position EP1. The movement route R1 is a route between the start position SP1 that is a starting point and an end position EP1 that is an end point, and includes an insertion section, a main section, and a move-away section. In the present method, the insertion step, the lifting step, the lifting step, the change step, and the press-in step are performed at the start position SP1. Moreover, in the present method, the joining step is performed in the insertion section, the main section, and the move-away section.

The insertion section is a section from the start position SP1 set on the end surface 11a of the peripheral wall portion 11 to the intermediate position S1 set on the front surface 3a of the sealing body 3. In the insertion section, the rotating tool F inserted at the start position SP1 is gradually pressed in while being moved toward the intermediate position S1.

The main section is a section that makes a circuit from the intermediate position S1 along a first butting portion J1, passes the intermediate position S1, and extends to the intermediate position E1 set on the front surface 3a of the sealing body 3. As described in detail later, in the main section, the movement route R1 is set slightly inside (on the sealing body 3 side of) the first butting portion J1. In the main section, the rotating tool F is moved at substantially the constant depth.

The move-away section is a section from the intermediate position E1 to the end position EP1 set on the end surface 11a of the peripheral wall portion 11. In the move-away section, the rotating tool F to be described later is gradually lifted while being moved, and is separated from the sealing body 3 at the end position EP1.

A displacement amount P1 from the first butting portion J1 to the movement route R1 may be set as appropriate, and is preferably 0.1 (mm)<P1, more preferably 0.2 (mm)<P1, and is preferably P1<0.5 (mm), more preferably P1<0.4 (mm). The displacement amount P1 is a distance from the first butting portion J1 to the movement route R1. Specifically, the displacement amount P1 means how much the movement route R1 is displaced with respect to the first butting portion J1 on the same plane.

### <Rotating Tool>

The rotating tool F used in the manufacturing of the joined body is explained. As shown in FIG. 4, the rotating tool F includes a shoulder portion F1 and a stirring pin F2. The rotating tool F is made of, for example, a tool steel. The shoulder portion F1 is a portion connected to an output shaft of a joining apparatus (illustration omitted), and has a column shape or a frustum shape. The stirring pin F2 extends downward from a lower end surface F1a of the shoulder portion F1. The stirring pin F2 has a truncated cone shape whose diameter decreases toward the distal end side with the lower end surface F1a side of the shoulder portion F1 being the base end. The lower end surface F1a may have a flat surface shape or a mortar shape recessed upward (in a direction away from the stirring pin F2). The distal end of the stirring pin F2 is flat. A helical groove is formed on an outer peripheral surface of the stirring pin F2 entirely across the height direction of the stirring pin F2. The helical groove may be either a right-handed helix or a left-handed helix, and is a left-handed (counterclockwise as viewed from above) helix in the present embodiment. The length L1 of the stirring pin F2 can be designed depending on a joining depth of the joined members. In the present embodiment, the stirring pin is inserted to a depth of 15 mm that is the height dimension of the step side surface 12b in order to join the entire first butting portion J1 to be described later and to perform joining to such a level that the joining reaches a second butting portion J2. Accordingly, explanation is given of the case where the length L1 of the stirring pin F2 is 15 mm as an example.

When the helical groove is the left-handed helix and the rotating tool F is rotated rightward or the helical groove is the right-handed helix and the rotating tool F is rotated leftward, a plastic flow material softened by the friction stirring is guided by the helical groove to flow toward the distal end side of the stirring pin F2. This can prevent the plastic flow material from overflowing to the outside in the friction stir welding, and suppress generation of a burr. Note that the case where the helical groove is the left-handed helix and the rotating tool F is rotated rightward or the case where the helical groove is the right-handed helix and the rotating tool F is rotated leftward as explained above is defined as "forward rotation". Meanwhile, the case where the helical groove is the left-handed helix and the rotating tool F is rotated leftward or the case where the helical groove is the right-handed helix and the rotating tool F is rotated rightward is defined as "reverse rotation".

### <Preparation Step>

The preparation step is a step of preparing the jacket main body 2 and the sealing body 3. Although methods for manufacturing the jacket main body 2 and the sealing body 3 are not limited to particular methods, the jacket main body 2 is shaped by, for example, die-casting. The sealing body 3 is shaped by, for example, extrusion.

### <Butting Step>

As shown in FIG. 2, the butting step is a step of placing the sealing body 3 on the jacket main body 2 and causing the side surfaces thereof to butt against each other. The butting step causes a side surface 3c of the sealing body 3 and the step side surface (side surface) 12b of the peripheral wall step portion 12 to butt against each other, and the first butting portion J1 is formed. As shown in FIG. 3, the first butting portion J1 is formed in a rectangular shape in a plan view, around the sealing body 3, along an inner edge of the end surface 11a of the jacket main body 2. Moreover, the step bottom surface 12a of the peripheral wall step portion 12 and a back surface 3b of the sealing body 3 are made to butt against each other (laid one on top of the other), and the second butting portion J2 is formed. The plate thickness of the sealing body 3 is the same as the height dimension of the step side surface 12b in the present embodiment. The plate thickness of the sealing body 3 may be set larger than the height dimension of the step side surface 12b. This can prevent insufficiency of metal of the joining portion. Note that, after the butting step, the jacket main body 2 and the sealing body 3 are fixed by a jig (illustration omitted) so as not to be misaligned.

### <Insertion Step>

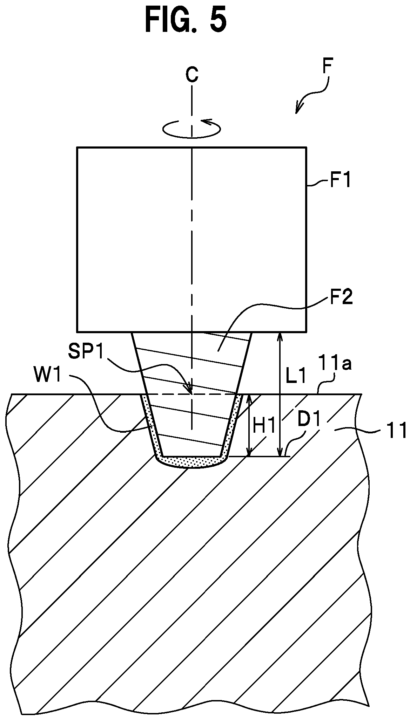

As shown in FIG. 5, the insertion step is a step of inserting the rotating tool F into the joined member (jacket main body 2 in this case). In the insertion step, the rotating tool F is rotated (reverse-rotated) in the same direction as a formation direction of the helical groove provided in the stirring pin F2. Since the helical groove is the left-handed helix in the present embodiment, the rotating tool F is rotated leftward. In the insertion step, the rotating tool F is pressed in until the rotating tool F reaches a predetermined insertion depth H1. The insertion depth H1 is a distance from the end surface 11a of the peripheral wall portion 11 to the distal end of the stirring pin F2. The insertion depth H1 can be set as appropriate within a range equal to or less than the length L1 of the stirring pin F2. In the insertion step, the insertion depth H1 may be set within such a range that only the stirring pin F2 is brought into contact with the peripheral wall portion 11 and the shoulder portion F1 does not come into contact with the peripheral wall portion 11. The insertion step friction-stirs the material of the sealing body 3, and a plasticized region W1 is formed. Note that the position of the distal end of the inserted stirring pin F2 is set as a first virtual reference plane D1.

The insertion depth H1 of the stirring pin F2 in the insertion step may be set as appropriate depending on the length L1 of the stirring pin F2 and the joined member, and is preferably 7.5 mm or more, more preferably 9 mm or more, even more preferably 10.5 mm or more, and is preferably 15 mm or less, more preferably 13.5 mm or less, even more preferably 12 mm or less.

The insertion depth H1 of the stirring pin F2 in the insertion step is, in a relationship with the length L1 of the stirring pin F2, preferably L1×0.5≤H1, more preferably L1×0.6≤H1, even more preferably L1×0.7≤H1, and is preferably H1≤L1, more preferably H1≤L1×0.9, even more preferably H1≤L1×0.8.

The number of revolutions of the rotating tool F in the insertion step may be set as appropriate, and is preferably set to the number of revolutions equal to or higher than that in the joining step. The number of revolutions of the rotating tool F in the insertion step is, for example, preferably 400 rpm or more, more preferably 600 rpm or more, even more preferably 800 rpm or more, even yet more preferably 900 rpm or more, particularly preferably 1,000 rpm or more, and is preferably 5,000 rpm or less, more preferably 4,000 rpm, even more preferably 3,000 rpm.

The number of revolutions of the rotating tool F in the insertion step is such that, for example, a relationship between the number N1 of revolutions of the rotating tool F in the insertion step and the number N2 of revolutions of the rotating tool F in the joining step is preferably N2≤N1, more preferably N2×1.1≤N1, even more preferably N2×1.5≤N1, and is preferably N1≤N2×5, more preferably N1≤N2×4, even more preferably N1≤N2×3.

### <Lifting Step>

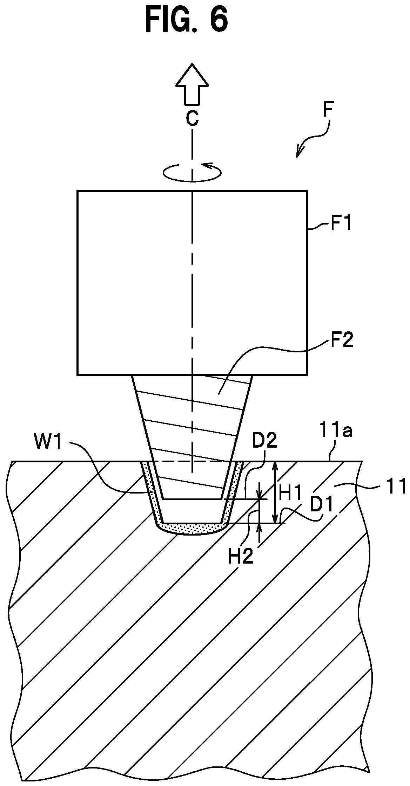

As shown in FIG. 6, the lifting step is a step of lifting the rotating tool F in a front surface direction of the joined member (jacket main body 2 in this case) after the insertion step. Specifically, the rotating tool F is lifted with the rotation direction in the insertion step (reverse rotation) maintained. The position of the distal end after the lifting of the rotating tool F in the lifting step is defined as second virtual reference plane D2. A lifting amount H2 by which the rotating tool F is lifted in the lifting step is a distance from the first virtual reference plane D1 to the second virtual reference plane D2. In the lifting step, the rotating tool F may only be slightly lifted from the first virtual reference plane D1, or lifted to a position above the end surface 11a of the peripheral wall portion 11 to be separated from the end surface 11a.

The lifting amount H2 in the lifting step may be set as appropriate depending on the length L1 of the stirring pin F2 and the joined member, and is preferably 0.1 mm or more, more preferably 0.3 mm or more, even more preferably 0.5 mm or more, and preferably 7.5 mm or less, more preferably 3 mm or less, even more preferably 2 mm or less.

The lifting amount H2 in the lifting step may be set as appropriate, and a relationship between the lifting amount H2 and the insertion depth H1 is preferably H1×0.01≤H2, more preferably H1×0.05≤H2, even more preferably H1×0.1≤H2, and is preferably H2≤H1×0.5, more preferably H2≤H1×0.3, even more preferably H2≤H1×0.2.

### <Change Step>

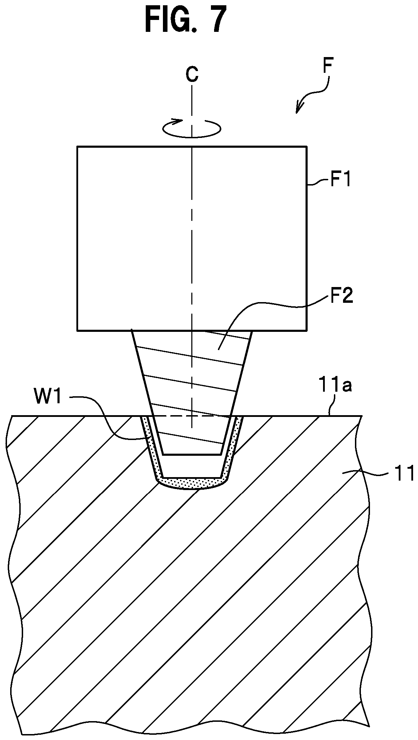

As shown in FIG. 7, the change step is a step of changing the rotation direction of the rotating tool F. In the present embodiment, since the reverse rotation is performed in the insertion step, the rotation is changed from the reverse rotation to the forward rotation. In other words, in the present embodiment, the rotation direction of the rotating tool F is changed from the leftward rotation to the rightward rotation. The change step may be performed in a state where the stirring pin F2 is in contact with the peripheral wall portion 11, or the rotation direction may be changed in a state where the stirring pin F2 is separated from the peripheral wall portion 11 as in the present embodiment.

In the change step, the number of revolutions of the rotating tool F after the changing of the rotation direction can be set as appropriate depending on the joined member. The number of revolutions of the rotating tool F after the changing of the rotation direction can be set to the same number of revolutions as the number of revolutions of the rotating tool F set in the joining step.

### <Press-in Step>

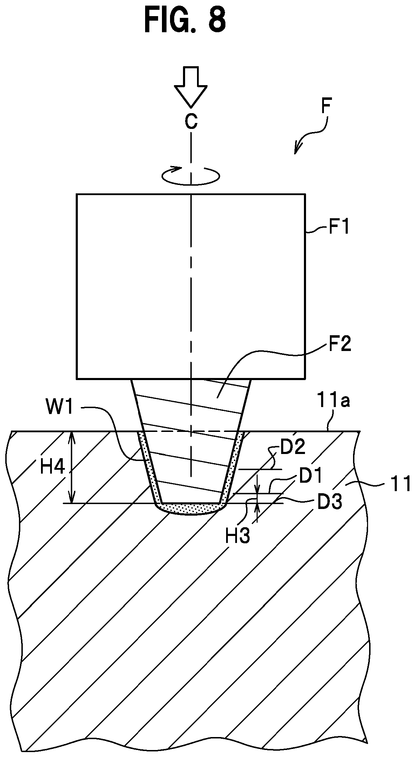

As shown in FIG. 8, the press-in step is a step of pressing the rotating tool F in a depth direction of the joined member (jacket main body 2 in this case) after the change step. Specifically, the rotating tool F is pressed in with the rotation direction after the change step (forward rotation) maintained. In the press-in step, the position of the distal end after the press-in of the rotating tool F is defined as third virtual reference plane D3. In the press-in step, an insertion amount H3 by which the rotating tool F is pressed in is a distance from the first virtual reference plane D1 to the third virtual reference plane D3 (insertion amount from recontact of the stirring pin F2 with the peripheral wall portion 11). In the press-in step, the rotating tool F may be brought into slight contact with the peripheral wall portion 11. Specifically, the insertion amount is preferably set such that the distal end side of the stirring pin F2 is located at a position deeper than at least the first virtual reference plane D1.

In the press-in step, the rotating tool F is pressed in to a predetermined insertion depth H4. The insertion depth H4 is a distance from the end surface 11a of the peripheral wall portion 11 to the distal end of the stirring pin F2. The insertion depth H1 in the insertion step and the insertion amount H3 and the insertion depth H4 in the press-in step satisfy a relationship of H1+H3=H4. The insertion depth H4 in the press-in step is the insertion depth of the rotating tool F in the case where the friction stir welding is started in the joining step.

Moreover, the insertion amount H3 in the press-in step may be set as appropriate depending on the length L1 of the stirring pin F2 and the joined member, and is preferably 0.1 mm or more, more preferably 0.3 mm or more, even more preferably 0.5 mm or more, and is preferably 7.5 mm or less, more preferably 3 mm or less, and even more preferably 1 mm or less. The insertion amount H3 may be, for example, about 1/10 of the length L1 of the stirring pin F2.

The insertion amount H3 in the press-in step is such that the relationship between the insertion amount H3 and the insertion depth H1 is preferably H1×0.01≤H3, more preferably H1×0.05≤H3, even more preferably H1×0.1≤H3, and is preferably H3≤H1×0.5, more preferably H3≤H1×0.3, even more preferably H3≤H1×0.2.

Moreover, the insertion depth H4 in the press-in step may be set as appropriate depending on the length L1 of the stirring pin F2 and the joined member, and is preferably 8 mm or more, more preferably 9 mm or more, even more preferably 10 mm or more, and is preferably 15 mm or less, more preferably 13.5 mm or less, even more preferably 12 mm or less.

The insertion depth H4 in the press-in step is such that a relationship between the insertion depth H4 and the insertion depth H1 is preferably H1×1.01≤H4, more preferably H1×1.05≤H4, even more preferably H1×1.1≤H4, and is preferably H4≤H1×1.5, more preferably H4≤H1×1.3, even more preferably H4≤H1×1.2.

The number of revolutions of the rotating tool F in the press-in step can be set as appropriate depending on the joined member. The number of revolutions of the rotating tool F in the press-in step can be set to the same number of revolutions as the number of revolutions of the rotating tool F set in the joining step.

### <Joining Step>

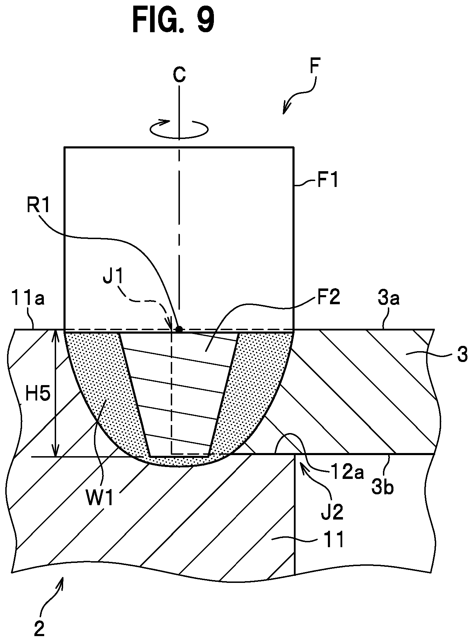

As shown in FIG. 9, the joining step is a step of joining the joined members (jacket main body 2 and sealing body 3 in this case) to each other in a state where the rotating tool F is rotated in the opposite direction to the formation direction of the helical groove. Specifically, in the joining step, the friction stir welding is performed in the state where the forward rotation is performed. In the joining step, the joining of the joined members is performed by moving the rotating tool F while the rotating tool F is rotated in the opposite direction to the formation direction of the helical groove. After the rotating tool F is pressed in to the predetermined insertion depth H4 in the press-in step described above, the rotating tool F is gradually pressed in toward a deep position until it reaches a predetermined insertion depth H5, while being moved to the intermediate position S1. When the rotating tool F reaches the intermediate position S1, the rotating tool F is moved along the first butting portion J1 with the rotating axis C of the rotating tool F laid on the movement route R1. The movement route R1 may be set at the same position as the first butting portion J1. However, in the present embodiment, the movement route R1 is set slightly inside (on the sealing body 3 side of) the first butting portion J1. The movement route R1 and the first butting portion J1 are substantially parallel to each other.

The insertion depth H5 of the rotating tool F is a distance from the end surface 11a of the peripheral wall portion 11 to the distal end of the stirring pin F2. The insertion depth H5 may be set as appropriate within a range in which the first butting portion J1 can be joined by the friction stir welding, and is set such that the distal end of the stirring pin F2 is located deeper than the step bottom surface 12a in the present embodiment.

In the joining step, the rotating tool F is made to go around in a circuit in a right-handed turning from the intermediate position S1 (see FIG. 3) along the movement route R1 with the insertion depth H5 maintained, and then moved to the intermediate position E1 with the plasticized region W1 partially overlapping. Then, the rotating tool F is gradually lifted while being moved to the end position EP1. Eventually, the rotating tool F is separated from the sealing body 3 at the end position EP1.

Moreover, the insertion depth H5 in the joining step may be set as appropriate depending on the length L1 of the stirring pin F2 and the joined member, and is preferably 15 mm or more, more preferably 16 mm or more, and is preferably 18 mm or less, more preferably 17 mm or less in the present embodiment.

### [1-3. Operations and Effects]

According to the method for manufacturing the joined body according to the present embodiment explained above, in the insertion step, the stirring pin F2 is inserted into the joined member (jacket main body 2 in this case) in the state where the rotating tool F is rotated (reverse-rotated) in the same direction as the formation direction of the helical groove. This causes the helical groove to act like a blade of a drill against the joined member when the stirring pin F2 is inserted into the joined member, and the helical groove thereby enters the joined member while shaving off the material of the joined member. Specifically, in the insertion step of the present embodiment, since the stirring pin F2 enters the joined member without causing plastic flow as in the case of the forward rotation, the rotating tool F can enter the joined member more easily than in the forward rotation. In the inserting of the stirring pin F2, the joined member is thereby actively discharged to the outside with the inserting of the stirring pin, and this can reduce load applied to the rotating tool F and the joining apparatus in the inserting. Moreover, wear of the helical groove of the stirring pin F2 is reduced by an amount corresponding to the reduction of the load, and breakage of the stirring pin F2 can be reduced.

Furthermore, a prepared hole has been conventionally provided at the start position SP1 of the stirring pin F2 to reduce press-in resistance. However, in this case, a step of forming the preprepared hole is added, and there is a problem of this step taking time. Moreover, for example, when the formation of the preparation hole and the friction stir welding are performed by using a machining center, there is also a problem of replacement of tools used for each process taking time. However, according to the present embodiment, it is possible to reduce the press-in resistance without provision of the prepared hole and smoothly perform the inserting of the stirring pin F2, and the productivity can be improved.

Moreover, in the present embodiment, the rotation direction of the rotating tool F is switched to the opposite direction to the formation direction of the helical groove after the inserting of the stirring pin F2, and the friction stir welding is performed in the state where the rotating tool F is rotated (forward-rotated) in the opposite direction to the formation direction of the helical groove. This can cause downward plastic flow in the friction stir welding to supply the material toward the distal end side of the stirring pin F2, and make it less likely for a defect to occur in an interior.

Furthermore, in the insertion step of the present embodiment, the material of the shaved-off joined member is assumed to be discharged to the outside of the joined member with the rotation of the helical groove, like chips generated by cutting with a drill. The material flowing out by being plasticized and fluidized is thereby less likely to remain as a burr on the surface of the joined member (end surface 11a of the peripheral wall portion 11 in this case) after the friction stir welding. Thus, burden of post-processing such as cutting processing performed to remove the burr is reduced, and the productivity can be improved.

Moreover, the number of revolutions of the rotating tool F in the insertion step of the present embodiment may be set as appropriate, and is preferably equal to or higher than the number of revolutions of the rotating tool F in the joining step. Setting the number of revolutions in the insertion step equal to or higher than the number of revolutions in the joining step allows the joined member to be shaved off by the helical groove in the inserting of the stirring pin F2, and makes it more likely for the chips of the joined member shaved off with the rotation of the rotating tool F to be blown away from the front surface of the joined member to the outside, and the burr and the chips are less likely to remain on the front surface of the joined member after the joining. Particularly, the chips of the joined member are more likely to be blown away also when the size of the rotating tool F is relatively small. Moreover, when the number of revolutions in the inserting is low, take-up of an oxidization coating is more likely to occur. However, setting the number of revolutions in the insertion step equal to or higher than the number of revolutions in the joining step can prevent occurrence of this take-up.

Furthermore, the relationship between the number N1 of revolutions of the rotating tool F in the insertion step and the number N2 of revolutions of the rotating tool F in the joining step is preferably N2≤N1≤N2×5 as in the present embodiment. Setting the number N1 of revolutions equal to or higher than N2 can improve a shave-off effect of the joined members by the helical groove of the stirring pin F2. Moreover, setting the number N1 of revolutions equal to or lower than N2×5 can reduce the load applied to the rotating tool F and the joining apparatus.

Moreover, it is preferable that the method further includes the lifting step of lifting the rotating tool F in the front surface direction of the joined member after the insertion step, and the change step is performed in the lifting step as in the present embodiment. Lifting the rotating tool F after the insertion step reduces (substantially eliminates) a contact resistance between the rotating tool F and the joined member. This can suppress load on the rotating tool F and the joining apparatus generated in the changing of the rotation direction.

Furthermore, the relationship between the insertion depth H1 of the rotating tool F in the insertion step and the lifting amount H2 in the lifting step is preferably H1×0.01≤H2≤H1×0.5 as in the present embodiment. Setting the lifting amount H2 equal to or more than H1×0.01 can reduce the contact resistance with the joined member. Setting the lifting amount H2 equal to or less than H1×0.5 can prevent the case where the rotating tool F and the joined member are excessively moved away from each other and the temperature of the joined member thereby decreases, and the joining thereafter can be preferably performed.

Furthermore, it is preferable that the method further includes the press-in step of pressing the rotating tool F in the depth direction of the joined member after the change step, and the joining step is performed after the press-in step as in the present embodiment. Pressing in the stirring pin F2 after the changing of the rotation direction can change a metallic structure formed in the reverse rotation in the insertion step to a structure formed of a downward plastic flow material by the forward rotation. Moreover, the rotating tool (stirring pin F2(+shoulder portion F1)) F newly coming into contact with the joined member by the press-in of the stirring pin F2 can increase heat generation. Accordingly, the joining thereafter can be preferably performed.

Moreover, the relationship between the insertion depth H1 of the rotating tool in the insertion step and the insertion amount H3 in the press-in step is preferably H1×0.01≤H3≤H1×0.5 as in the present embodiment. Setting the insertion amount H3 equal to or more than H1×0.01 generates the structure formed of the downward plastic flow by the forward rotation and also increases the heat generation by the contact between the rotating tool F and the new joined member, and the friction stir welding can be preferably performed. Moreover, setting the insertion amount H3 equal to or less than H1×0.5 can reduce the load applied to the rotating tool F and the joining apparatus.

Furthermore, the relationship between the insertion depth H1 of the rotating tool in the insertion step and the insertion depth H4 at the start of the joining in the joining step is preferentially H1×1.01≤H4≤H1×1.5 as in the present embodiment. Setting the insertion depth H4 equal to or more than H1×0.01 generates the structure formed of the downward plastic flow by the forward rotation and also increases the heat generation by the contact between the rotating tool F and the new joined member, and the friction stir welding can be preferably performed. Moreover, setting the insertion depth H4 equal to or less than H1×1.5 can reduce the load applied to the rotating tool F and the joining apparatus.

Moreover, including the shoulder portion F1 as in the rotating tool F of the present embodiment can cause the chips to be preferably blown away by the contact with the shoulder portion F1, and also improves heat generation efficiency by the shoulder portion F1 in the joining. Note that, when the rotating tool including the shoulder portion is used, the contact area with the joined member generally increases, and the load acting on the joining apparatus thus tends to increase. However, in the present embodiment, the method includes the insertion step, the lifting step, the change step, and the press-in step, and the joined member is actively discharged to the outside in advance in these steps (in inserting). Accordingly, when the friction stir welding is performed with the shoulder portion brought into contact with the joined member, the load acting on the rotating tool F and the joining apparatus can be reduced.

Furthermore, the relationship between the insertion depth H1 of the rotating tool F in the insertion step and the length L1 of the stirring pin F2 is preferably L1×0.5≤H1≤L1 as in the present embodiment. Setting the insertion depth H1 equal to or more than L1×0.5 allows the helical groove of the stirring pin F2 to shave off the material, and this facilitates obtaining of the effect of reducing the load applied to the rotating tool F and the joining apparatus. Moreover, setting the insertion depth H1 to H1≤L1 can prevent the case where the shoulder portion F1 and the joined member come into contact with each other at a great degree in the insertion step and the contact resistance increases.

Moreover, in the present embodiment, the liquid-cooling jacket 1 is formed of the jacket main body (first joined member) 2 and the sealing body 3 (second joined member) with a lower hardness than the jacket main body 2. This can improve the strength of the liquid-cooling jacket (joined body) 1. Moreover, in the present embodiment, the movement route R1 is set inside the first butting portion J1, and the friction stir welding is performed in the state where the rotating axis C of the rotating tool F is laid on the movement route R1. This can prevent mixing of the harder material of the jacket main body 2 into the sealing body 3 side as much as possible, and prevent a decrease in the strength of the joining portion. Moreover, since imbalance due to material resistances in the friction stir welding is also eliminated, the materials are friction-stirred in a good balance, and are preferably joined to each other. Note that, from a viewpoint of reducing the load applied to the rotating tool F and the joining apparatus in the inserting, it is desirable to insert the stirring pin into the second joined member side with a lower hardness than the first joined member. In the present embodiment, including the insertion step, the change step, and the joining step in this order enables reduction of the load applied to the rotating tool F and the joining apparatus in the inserting also when the stirring pin is inserted into the first joined member with a high hardness.

Furthermore, setting the insertion depth in the joining step such that the distal end of the stirring pin F2 reaches the step bottom surface 12a enables sure friction stir welding of not only the first butting portion J1 but also the second butting portion J2.

Moreover, providing the start position SP1 on the first butting portion J1 may cause the take-up of the oxidization coating. However, in the joining step of the present embodiment, the start position SP1 is set on the end surface 11a of the peripheral wall portion 11. This can particularly prevent the oxidization coating from remaining in the plasticized region W1 at the inserting position.

### [1-4. Others]

Although the method for manufacturing the joined body according to the above embodiment has been explained, appropriate design changes can be made within the scope not departing from the spirit of the present invention. For example, in the above-mentioned embodiment, as an example, description is given of the case where the side surface 3c of the sealing body 3 and the step side surface 12b of the peripheral wall step portion 12 are made to butt against each other to form the first butting portion J1, that is the case where the end surfaces of both of the first joined member and the second joined member are made to butt against one another. The butting portion may be formed by butting the end surface of one of the first joined member and the second joined member against the other one of the first joined member and the second joined member.

Moreover, although the insertion step, the lifting step, the change step, and the press-in step are performed without movement of the rotating tool F from the start position SP1 in the above-mentioned embodiment, each step may be performed while the rotating tool F is moved in a traveling direction. Specifically, the insertion step, the lifting step, the change step, and the press-in step may be performed while the rotating tool F is moved from the start position SP1 in the insertion section.

Furthermore, the lifting step may be omitted. Specifically, the rotation direction of the rotating tool F may be changed after completion of the insertion step with the height position of the rotating tool F maintained (with the rotating tool F in contact with the joined member). Particularly, when the rotating tool F is relatively small, the contact resistance is small, and the lifting step may be thus omitted.

Moreover, the press-in step may be omitted.

Furthermore, although explanation is given of the case where the rotating tool F is gradually pressed in while being moved in the insertion section as an example, the rotating tool F may be inserted to the predetermined insertion depth H5 at the start position SP1, and then moved while being maintained at the insertion depth H5.

Moreover, in the joining step, the start position SP1 and the end position EP1 may be set on the first butting portion J1 or on the front surface 3a of the sealing body 3. Furthermore, although the liquid-cooling jacket with a rectangular solid shape is described as an example of the joined body in the present embodiment, the joined body may have other shapes, and it is only necessary that at least two members are joined to each other.

Moreover, the step side surface 12b may be tilted outward with respect to the step bottom surface 12a. In this case, the rotating axis C of the rotating tool F is preferably set inside the side surface 3c of the sealing body 3 such that contact between the stirring pin F2 and the peripheral wall portion 11 becomes less. This can minimize the mixing of the harder material of the jacket main body 2 into the sealing body 3 side, and a decrease in the joining strength can be thus prevented. Moreover, the imbalance due to the material resistances in the friction stirring can be eliminated. Furthermore, in this case, the plate thickness of the sealing body 3 may be set to be larger than the height dimension of the step side surface 12b. This can supplement material shortage in the joining portion.

### [2. First Modified Example of First Embodiment]

Next, a first modified example of the above-mentioned first embodiment is explained. A method for manufacturing the joined body according to the present modified example is different from that in the above-mentioned first embodiment in that the method includes a prepared hole forming step.

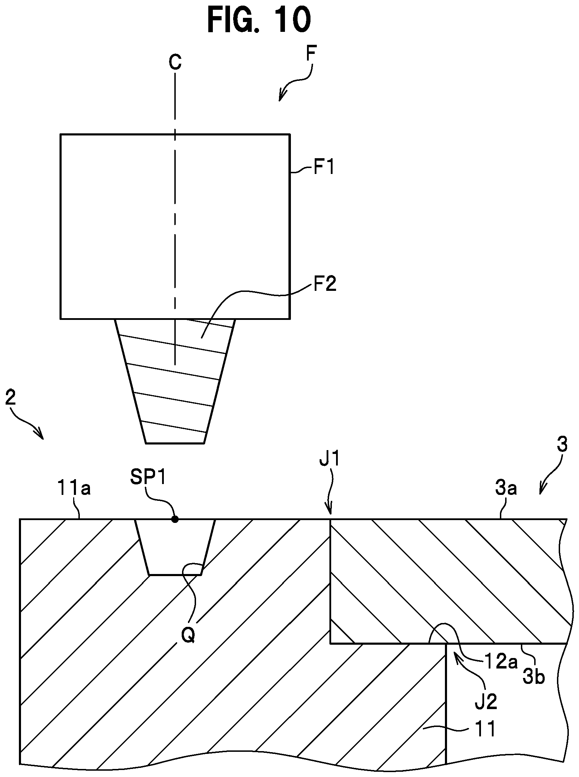

In the present modified example, as shown in FIG. 10, the prepared hole forming step is performed before execution of the insertion step. In the prepared hole forming step, a prepared hole Q is formed at the start position SP1 set on the end surface 11a of the peripheral wall portion 11 by using a cutting tool such as a rotary tool or an end mill. The shape of the prepared hole Q is a hollow portion with a frustum shape in the present modified example, but may be a hollow portion with a conical shape, a cylindrical shape, or a prism shape.

Performing the prepared hole forming step can reduce the press-in resistance of the rotating tool F in the execution of the insertion step. Moreover, this can also reduce breakage and friction of the rotating tool F. Particularly, when the jacket main body (first joined member) 2 is made of a relatively-hard material such as an aluminum alloy casting material, the reduction effect of the press-in resistance is remarkable. Note that, when the start position SP1 is set on the front surface 3a of the sealing body 3, the prepared hole Q may be provided on the front surface 3a. Moreover, the prepared hole Q may be formed in advance in the shaping stage of the jacket main body 2.

### [3. Second Modified Example of First Embodiment]

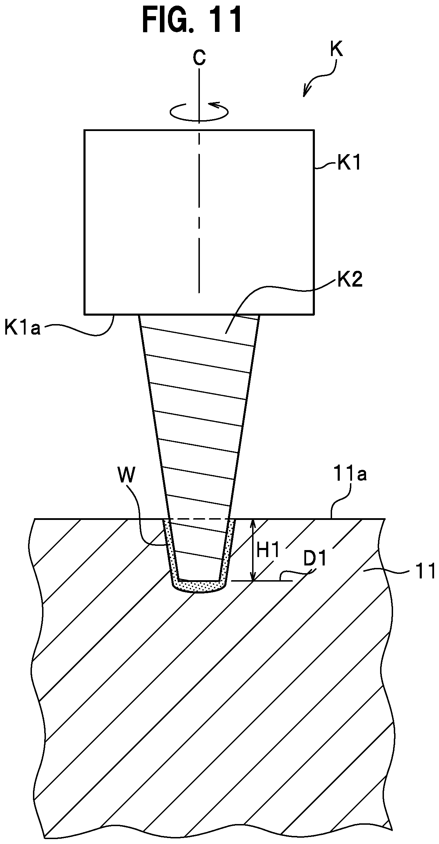

Next, a second modified example of the above-mentioned first embodiment is explained. As shown in FIG. 11, a method for manufacturing the joined body according to the present modified example is different from that in the above-mentioned first embodiment in that a rotating tool K is used.

The rotating tool K includes a base portion K1 and a stirring pin K2. The base portion K1 is a portion connected to the output shaft of the joining apparatus (illustration omitted), and has a column shape or a frustum shape. The stirring pin K2 has a truncated cone shape, and extends downward from a lower end surface K1a of the base portion K1. The stirring pin K2 has a length double the plate thickness of the sealing body 3 or more. A distal end of the stirring pin K2 is flat. A helical groove is formed on an outer peripheral surface of the stirring pin K2 entirely across the height direction. The helical groove may be either a right-handed helix or a left-handed helix, and is the left-handed helix (counterclockwise helix as viewed from above) in the present embodiment.

In the method for manufacturing the joined body in the present modified example, a preparation step, a butting step, an insertion step, a lifting step, a change step, a press-in step, and a joining step are performed. The preparation step and the butting step are the same as those in the above-mentioned first embodiment.

As shown in FIG. 11, in the insertion step, the rotating tool F is reverse-rotated (rotated leftward), and the stirring pin K2 is inserted into the end surface 11a of the peripheral wall portion 11. In the insertion step, only the stirring pin K2 is brought into contact with the peripheral wall portion 11.

Other points in the insertion step are the same as those in the above-mentioned first embodiment. Moreover, the lifting step, the change step, and the press-in step are the same as those in the above-mentioned first embodiment.

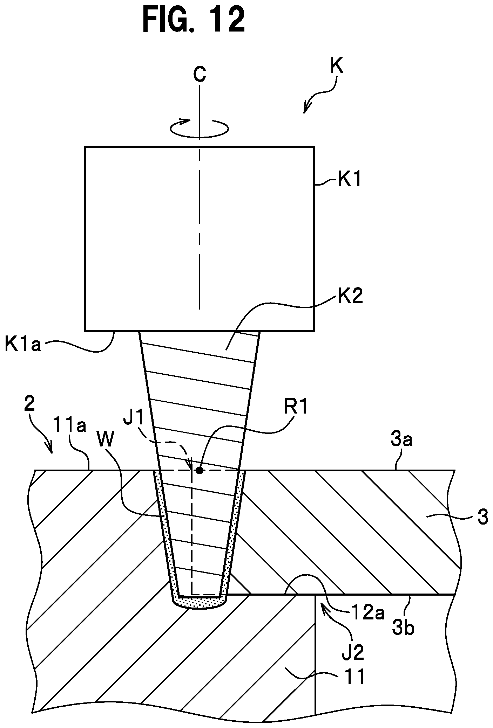

As shown in FIG. 12, in the joining step, the rotating tool K is moved in parallel to the first butting portion J1 while being forward-rotated (rotated rightward) with the rotating axis C laid on the movement route R1. In the joining step, the friction stir welding is performed in a state where only the stirring pin K2 is brought into contact with the joined members (jacket main body 2 and sealing body 3 in this case) and the base end side of the stirring pin K2 is exposed.

The rotating tool K of the present modified example can also provide effects substantially the same as those in the above-mentioned first embodiment. Moreover, in the joining step, the friction stir welding is performed in the state where only the stirring pin K2 is brought into contact with the joined members and the base portion K1 is not brought into contact with the joined members. Accordingly, the load acting on the joining apparatus can be reduced. Note that the step side surface 12b may be tilted outward also when the rotating tool K is used.

### [4. Third Modified Example of First Embodiment]

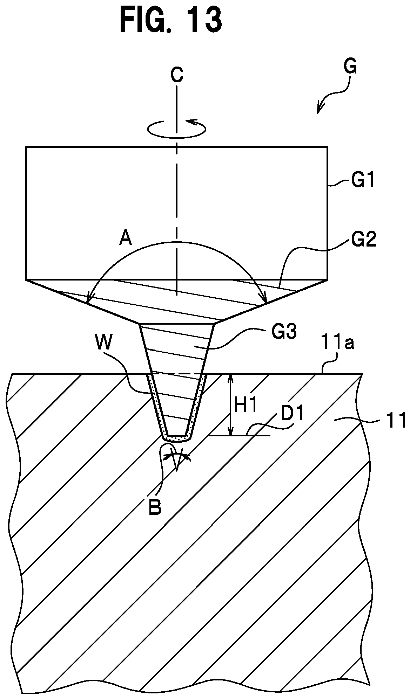

Next, a third modified example of the above-mentioned first embodiment is explained. A method for manufacturing the joined body according to the present modified example is different from that in the above-mentioned first embodiment in that a rotating tool G is used as shown in FIG. 13.

The rotating tool G is made of, for example, a tool steel, and is mainly formed of a base portion G1 and a stirring pin (a base-end-side pin G2 and a distal-end-side pin G3). The base portion G1 has a column shape or a frustum shape, and is a portion connected to the output shaft of the joining apparatus.

The base-end-side pin G2 is continuous with the base portion G1, and is tapered toward the distal end. The base-end-side pin G2 has a truncated cone shape. A taper angle A of the base-end-side pin G2 may be set as appropriate, and is, for example, 135 to 160°. Setting the taper angle A to 135 to 160° can reduce joining surface roughness after the friction stirring.

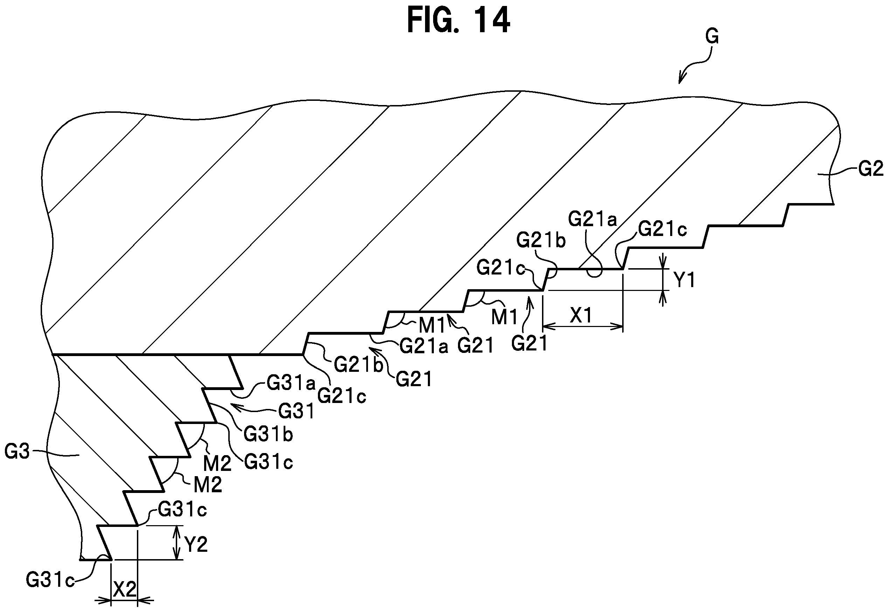

The taper angle A is larger than a taper angle B of the distal-end-side pin G3 to be described later. As shown in FIG. 14, pin step portions G21 with a step shape are formed on an outer peripheral surface of the base-end-side pin G2 entirely across the height direction. The pin step portions G21 are formed in a right-handed or left-handed helical shape. Specifically, the pin step portions G21 have a helical shape in a plan view, and have a step shape in a side view. In the present modified example, the pin step portions G21 are set to be a helix turning leftward while extending from the base end side toward the distal end side.

As shown in FIG. 14, each pin step portion G21 is formed of a step bottom surface G21a and a step side surface G21b. A distance X1 (horizontal distance) between vertices G21c, G21c of the adjacent pin step portions G21 is set as appropriate depending on a step angle M1 and the height Y1 of each step side surface G21b to be described later.

The height Y1 of each step side surface F21b may be set as appropriate, and is set to, for example, 0.1 to 0.4 mm. When the height Y1 is smaller than 0.1 mm, the joining surface roughness is large. Meanwhile, when the height Y1 is larger than 0.4 mm, the joining surface roughness tends to be large, and the number of effective step portions (number of the pin step portions G21 in contact with the joined metal member) also decreases.

The step angle M1 formed by each step bottom surface G21a and the corresponding step side surface G21b may be set as appropriate, and is set to, for example, 85 to 120°. The step bottom surface G21a is parallel to a horizontal plane (plane perpendicular to the rotating axis C in this case) in the present embodiment. The step bottom surface G21a may be tilted within a range of -5° to 15° with respect to the horizontal plane while extending from the rotating axis C in an outer peripheral direction (negative is downward with respect to the horizontal plane, positive is upward with respect to the horizontal plane). The distance X1, the height Y1 of the step side surface G21b, the step angle M1, and the angle of the step bottom surface G21a with respect to the horizontal plane are set as appropriate such that the plastic flow material escapes to the outside without being retained inside the pin step portion G21 and attaching thereto in the friction stirring and such that the step bottom surface G21a presses the plastic flow material to reduce the joining surface roughness.

As shown in FIG. 13, the distal-end-side pin G3 is formed continuously with the base-end-side pin G2. The distal-end-side pin G3 has a truncated cone shape. The distal end of the distal-end-side pin G3 is flat. The taper angle B of the distal-end-side pin G3 is smaller than the taper angle A of the base-end-side pin G2. As shown in FIG. 14, a helical groove G31 is carved on an outer peripheral surface of the distal-end-side pin G3. The helical groove G31 may be either a right-handed helix or a left-handed helix, and is carved as the left-handed helix in the present embodiment.

The helical groove G31 is formed of a helical bottom surface G31a and a helical side surface G31b. A distance (horizontal distance) between vertices G31c, G31c of adjacent portions of the helical groove G31 is defined as length X2. The height of the helical side surface G31b is defined as height Y2. A helix angle M2 formed by the helical bottom surface G31a and the helical side surface G31b is formed to be, for example, 45 to 90°. The helical groove G31 has roles of increasing the friction heat by coming into contact with the joined member and guiding the plastic flow material toward the distal end side. The helix angle M2, the length X2, and the height Y2 may be set as appropriate. Note that the pin step portions G21 and the helical groove G31 of the rotating tool G are portions corresponding to "helical groove of the stirring pin" in the claims.

In the method for manufacturing the joined body in the present modified example, a preparation step, a butting step, an insertion step, a lifting step, a change step, a press-in step, and a joining step are performed. The preparation step and the butting step are the same as those in the above-mentioned first embodiment.

As shown in FIG. 13, in the insertion step, the rotating tool G is reverse-rotated (rotated leftward), and the distal-end-side pin G3 is inserted into the end surface 11a of the peripheral wall portion 11. In the insertion step, only the distal-end-side pin G3 is brought into contact with the peripheral wall portion 11. Other points in the insertion step are the same as those in the above-mentioned first embodiment. Moreover, the lifting step, the change step, and the press-in step are the same as those in the above-mentioned first embodiment.

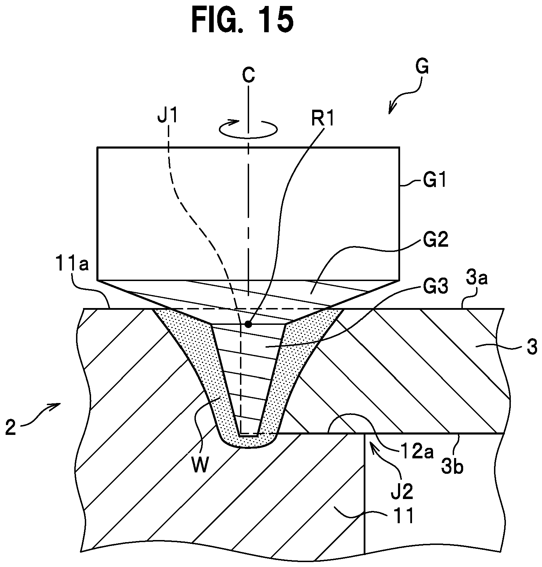

As shown in FIG. 15, in the joining step, the rotating tool G is moved in parallel to the first butting portion J1 while being rotated rightward (forward-rotated) with the rotating axis C laid on the movement route R1. In the joining step, the insertion depth is set such that the distal end of the distal-end-side pin G3 is located below the step bottom surface 12a with the outer peripheral surface of the base-end-side pin G2 coming into contact with the front surface 3a of the sealing body 3 and the end surface 11a of the peripheral wall portion 11.

The rotating tool G of the present modified example can also provide effects substantially the same as those in the above-mentioned first embodiment. Moreover, since the outer peripheral surface of the base-end-side pin G2 can press the plastic flow material in the joining step, a step recess groove formed on the joining surface can be made smaller, and a bulging portion formed beside the step recess groove can be eliminated or made smaller. Furthermore, since the pin step portions G21 with the step shape are shallow and have a wide exit, the plastic flow material tends to escape to the outside of the pin step portions G21 while the plastic flow material is pressed by the step bottom surfaces G21a. Accordingly, the plastic flow material is less likely to attach to the outer peripheral surface of the base-end-side pin G2 even when the plastic flow material is pressed by the base-end-side pin G2. Accordingly, it is possible to reduce the joining surface roughness and preferably stabilize joining quality.

Moreover, the rotating tool G of the present embodiment has a configuration including the base-end-side pin G2 and the distal-end-side pin G3 whose taper angle is smaller than the taper angle A of the base-end-side pin G2. This facilitates inserting of the rotating tool G into the jacket main body 2 and the sealing body 3. Moreover, since the taper angle B of the distal-end-side pin G3 is small, the rotating tool G can be easily inserted to a deep position in the first butting portion J1. Note that the step side surface 12b may be tilted outward also when the rotating tool G is used.

### [5. Fourth Modified Example of First Embodiment]

Next, a fourth modified example of the above-mentioned first embodiment is explained. A method for manufacturing the joined body according to the present modified example is different from that in the above-mentioned first embodiment in that the stirring pin is inserted toward the first butting portion J1 in the insertion step.

In the method for manufacturing the joined body of the present modified example (hereinafter, referred to as "present method" in some cases), a preparation step, a butting step, an insertion step, a lifting step, a change step, a press-in step, and a joining step are performed. The preparation step and the butting step are the same as the above-mentioned first embodiment.

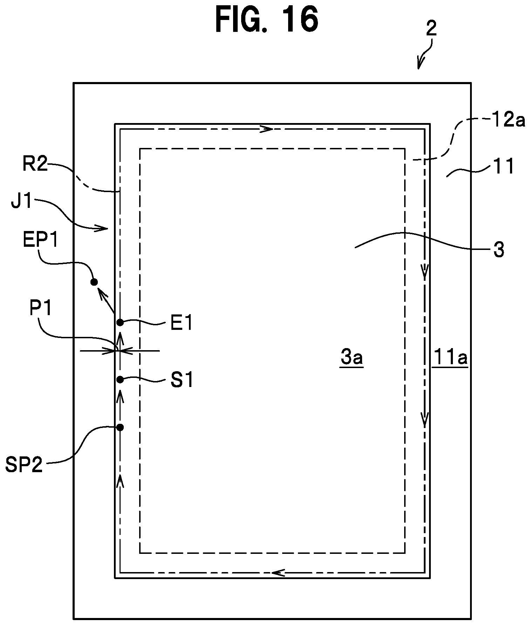

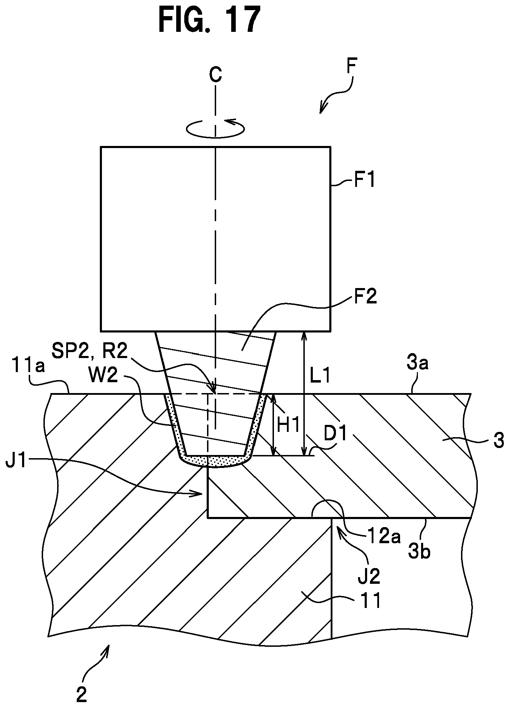

In the present method, as shown in FIG. 16, the friction stir welding of the jacket main body 2 and the sealing body 3 is performed in a state where the sealing body 3 is placed on the jacket main body 2 and the side surfaces thereof butt against each other. In the present method, the end position EP1 is set on the end surface 11a of the peripheral wall portion 11, and a start position SP2, the intermediate position S1, and the intermediate position E1 are set on the front surface 3a of the sealing body 3. In the present method, the start position SP2 that is the inserting position of the rotating tool F is set such that a plasticized region W2 (see FIG. 17) formed by inserting the stirring pin F2 at the start position SP2 has a positional relationship overlapping the first butting portion J1. A movement route R2 through which the rotating axis C of the rotating tool F of the present method travels passes the start position SP2, the intermediate position S1, the intermediate position E1, and the end position EP1. The movement route R2 is a route between the start position SP2 that is the starting point and the end position EP1 that is the end point, and includes the insertion section, the main section, and the move-away section. In the present method, the insertion step, the lifting step, the change step, and the press-in step are performed at the start position SP2. Moreover, in the present method, the joining step is performed in the insertion section, the main section, and the move-away section.

The insertion section is a section from the start position SP2 to the intermediate position S1. In the insertion section, the rotating tool F inserted at the start position SP2 is gradually pressed in while being moved toward the intermediate position S1.

In the main section, the movement route R2 is set slightly inside (on the sealing body 3 side of) the first butting portion J1. Moreover, the movement route R2 and the first butting portion J1 are substantially parallel to each other.

As shown in FIG. 17, the insertion step of the present method is a step of inserting the rotating tool F into the joined members (jacket main body 2 and sealing body 3). More specifically, the insertion step of the present method is a step of inserting the rotating tool F toward the first butting portion J1 of the jacket main body 2 and the sealing body 3. In the insertion step, the rotating tool F is rotated (reverse-rotated) in the same direction as the formation direction of the helical groove provided in the stirring pin F2, and is inserted toward the first butting portion J1. The insertion depth H1 of the stirring pin F2 can be set as in the first embodiment. The insertion step friction-stirs the materials of the jacket main body 2 and the sealing body 3, and the plasticized region W2 is formed. In this case, the plasticized region W2 is formed across the first butting portion J1 in a form in contact with the jacket main body 2 and the sealing body 3.

Other points of the insertion step are the same as those in the above-mentioned first embodiment. Moreover, the lifting step, the change step, the press-in step, and the joining step are the same as those in the above-mentioned first embodiment.

When the forward-rotated stirring pin is inserted into the joined members, the plasticized region is formed by the plastic flow of the joined members at the position where the stirring pin is inserted, and the joined members plasticized and fluidized is pressed downward by an amount corresponding to the volume of the inserted stirring pin. In this case, downward convection is generated in an inner portion of the plasticized region located around the stirring pin, and upward convection is generated in an outer portion of the plasticized region. Accordingly, when the forward-rotated stirring pin is inserted toward the first butting portion J1 formed of the step side surface 12b of the jacket main body 2 and the side surface 3c of the sealing body 3, the oxidization coating present at an interface near the position where the stirring pin is inserted is taken into the plastic flow and moves upward, and this reduces the joining strength of the first butting portion J1 in some cases. Moreover, when the forward-rotated stirring pin is inserted into the joined members, an amount of the joined members plasticized and fluidized to cause convection increases depending on the insertion amount of the stirring pin. Accordingly, an increase of the convection of the joined members plasticized and fluidized with the inserting of the stirring pin near the position where the stirring pin is inserted makes the take-in near the interface more likely to occur, and this reduces the joining strength of the first butting portion J1 in some cases.

According to the present method, in the insertion step, the stirring pin F2 is inserted toward the first butting portion J1 in the state where the rotating tool F is rotated (reverse-rotated) in the same direction as the formation direction of the helical groove. This generates the upward convection in the inner portion of the plasticized region W2 located around the stirring pin, and generates the downward convection in the outer portion of the plasticized region W2. Accordingly, the oxidation coating present at the interface of the jacket main body 2 and the sealing body 3 is more likely to be prevented from being taken in and moving upward, near the start position SP2 of the first butting portion J1. Moreover, according to the present method, when the stirring pin F2 is inserted, the joined members are actively discharged to the outside with the inserting of the stirring pin. This can reduce the amount of the joined members plasticized and fluidized to cause convection. This makes it more likely for the oxidization film present at the interface of the jacket main body 2 and the sealing body 3 to be prevented from being taken in. Accordingly, in the present method, the decrease of the joining strength in the butting portion J1 of the jacket main body 2 and the sealing body 3 can be suppressed.

### [6. Second Embodiment]

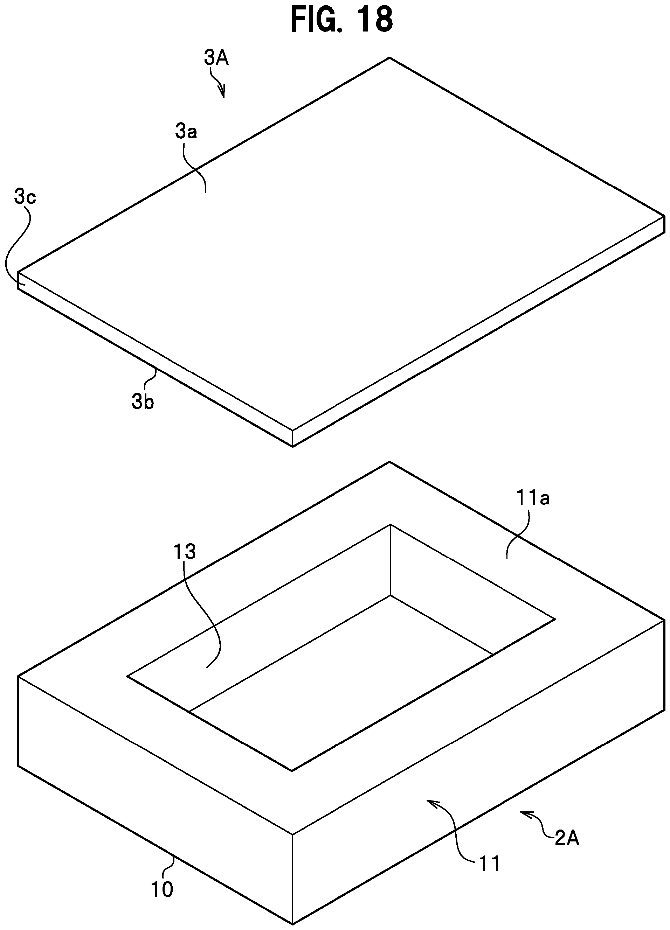

Next, a second embodiment of the present invention is explained. A method for manufacturing the joined body according to the present embodiment is different from the above-mentioned first embodiment in that a jacket main body 2A and a sealing body 3A are used as shown in FIG. 18.

The jacket main body 2A is formed of the bottom portion 10 and the peripheral wall portion 11. The recess portion 13 is formed inside the jacket main body 2A. The sealing body 3A covers an opening portion of the jacket main body 2A, and has the same size as an outer edge of the peripheral wall portion 11.

Next, the method for manufacturing the joined body according to the present embodiment (hereinafter, referred to as "present method" in some cases) is explained. In the method for manufacturing the joined body according to the present embodiment, a preparation step, an overlaying step, an insertion step, a lifting step, a change step, a press-in step, and a joining step are performed. Since the preparation step, the lifting step, the change step, and the press-in step are the same as those in the first embodiment, explanation thereof is omitted.

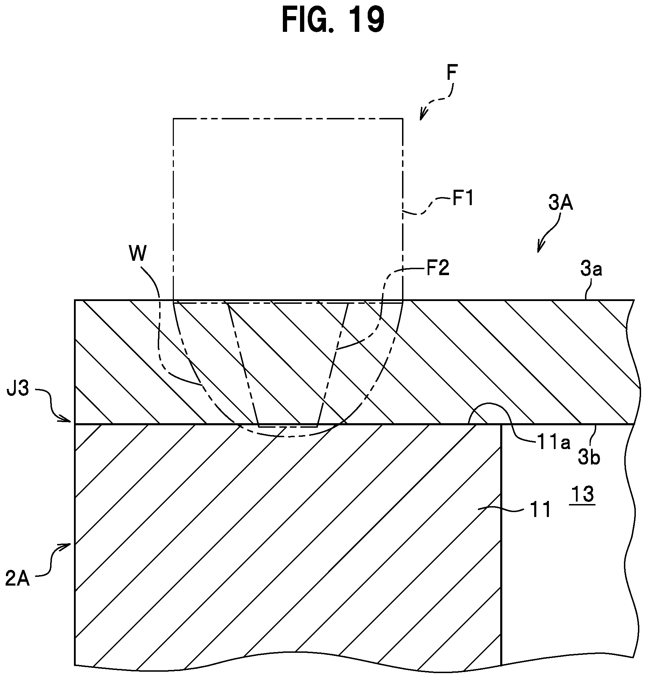

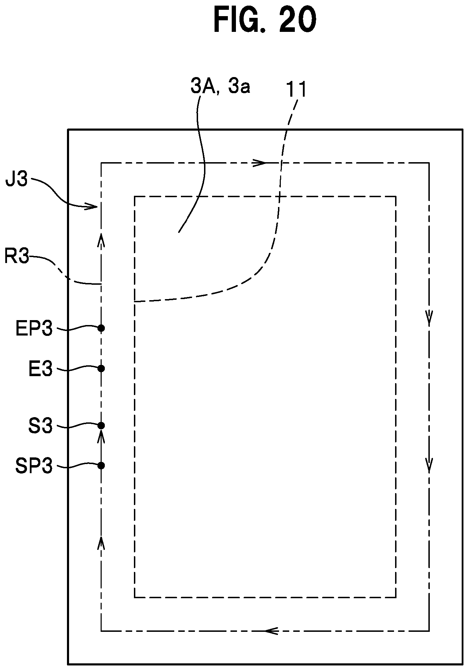

In the present method, as shown in FIG. 19, the friction stir welding of the jacket main body 2A and the sealing body 3A is performed in a state where the sealing body 3A is placed and laid over the jacket main body 2A. As shown in FIG. 20, in the present method, a start position SP3, an intermediate position S3, an intermediate position E3, and an end position EP3 are set at positions corresponding to an overlaying portion J3, on the front surface 3a of the sealing body 3. A movement route R3 through which the rotating axis C of the rotating tool F in the present method travels passes through the start position SP3, the intermediate position S3, the intermediate position E3, and the end position EP3. The movement route R3 has a rectangular shape in a plan view to overlap the overlaying portion J3. The movement route R3 is a route between the start position SP3 that is the starting point and the end position EP3 that is the end point, and includes the insertion section, the main section, and the move-away section. In the present method, the insertion step, the lifting step, the change step, and the press-in step are performed at the start position SP3. Moreover, in the present method, the joining step is performed in the insertion section, the main section, and the move-away section.

The insertion section is a section from the start position SP3 to the intermediate position S3. In the insertion section, the rotating tool F inserted at the start position SP3 is gradually pressed in while being moved toward the intermediate position S3.

The main section is a section in which the rotating tool F makes a circuit from the intermediate position S3 along the overlaying portion J3, then passes the intermediate position S3, and moves to the intermediate position E3. In this case, as shown in FIG. 19, the insertion depth of the rotating tool F is maintained constant such that the stirring pin F2 reaches the end surface 11a.

The move-away section is a section from the intermediate position E3 to the end position EP3. In the move-away section, the rotating tool F reaching the intermediate position E3 is gradually lifted while being moved toward the end position EP3. When the rotating tool F reaches the end position EP3, the rotating tool F is moved away from the sealing body 3.

As shown in FIG. 19, the overlaying step is a step of laying the sealing body 3A over the jacket main body 2A. In the overlaying step, the back surface 3b of the sealing body 3A is laid over the end surface 11a of the peripheral wall portion 11 to form the overlaying portion J3. The overlaying portion J3 is formed along an outer periphery of the recess portion 13 to have a rectangular frame shape in a plan view.

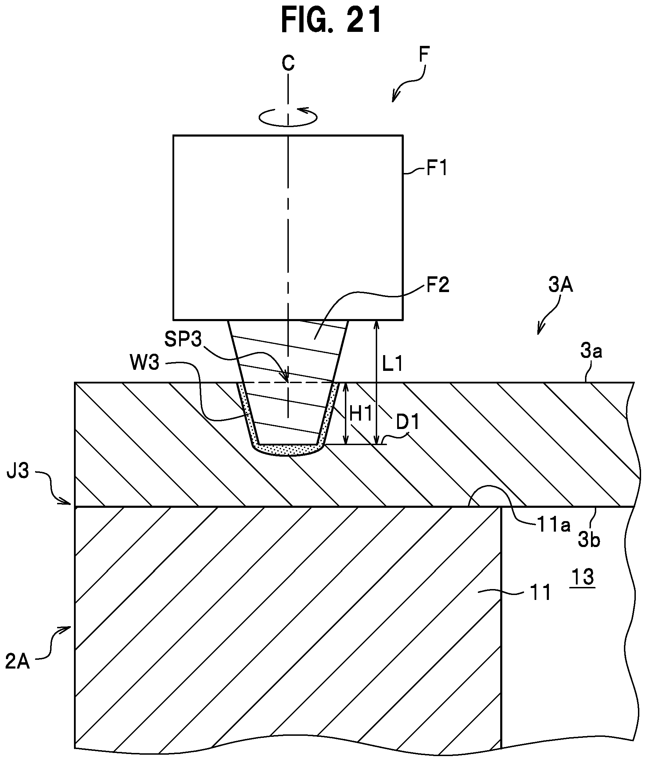

As shown in FIG. 21, the insertion step is a step of inserting the rotating tool F into the joined member (sealing body 3A). More specifically, the insertion step is a step of inserting the rotating tool F from the front surface 3a of the sealing body 3A toward the overlaying portion J3 of the jacket main body 2A and the sealing body 3A. In the insertion step, the rotating tool F is rotated (reverse-rotated) in the same direction as the formation direction of the helical groove provided in the stirring pin F2. Since the helical groove is a left-handed helix in the present embodiment, the rotating tool F is rotated leftward. In the insertion step of the present embodiment, the insertion depth H1 is set within such a range that the stirring pin F2 comes into contact with only the sealing body 3A and does not come into contact with the peripheral wall portion 11. In the insertion step, the insertion depth H1 may be set within such a range that only the stirring pin F2 comes into contact with the front surface 3a of the sealing body 3A and the shoulder portion F1 does not come into contact with the front surface 3a. The material of the sealing body 3A is friction-stirred by the insertion step, and a plasticized region W3 is formed.

The joining step is a step of performing friction stir welding on the overlaying portion J3 by using the rotating tool F. In the present method, the insertion depth of the rotating tool F in the joining step is set such that the shoulder portion F1 is slightly pressed into the front surface 3a of the sealing body 3 and the stirring pin F2 reaches the end surface 11a of the peripheral wall portion 11. The insertion depth of the rotating tool F in the joining step may be set as appropriate, and for example, the overlaying portion J3 may be joined in a state where the stirring pin F2 does not reach the end surface 11a.

The present embodiment explained above can also provide substantially the same effects as those in the above-mentioned first embodiment. Moreover, according to the present embodiment, the overlaying portion J3 can be joined.

Note that, although explanation is given of the case of using the rotating tool F as an example in the present embodiment, the rotating tool K or G may be used.

Moreover, in the present embodiment, the start position SP3 and the end position EP3 may be set at positions not corresponding to the overlaying portion J3 (inside the overlaying portion J3), on the front surface 3a of the sealing body 3A.

### [7. First Modified Example of Second Embodiment]

Next, a first modified example of the above-mentioned second embodiment is explained. A method for manufacturing the joined body according to the present modified example is different from the above-mentioned second embodiment in that the insertion depth H1 of the stirring pin F2 is set such that a plasticized region W4 formed in the insertion step is a range overlapping the overlaying portion J3.

In the method for manufacturing the joined body according to the present modified example (hereinafter, referred to as "present method" in some cases), a preparation step, an overlaying step, an insertion step, a lifting step, a change step, a press-in step, and a joining step are performed. The preparation step and the overlaying step are the same as those in the above-mentioned second embodiment.

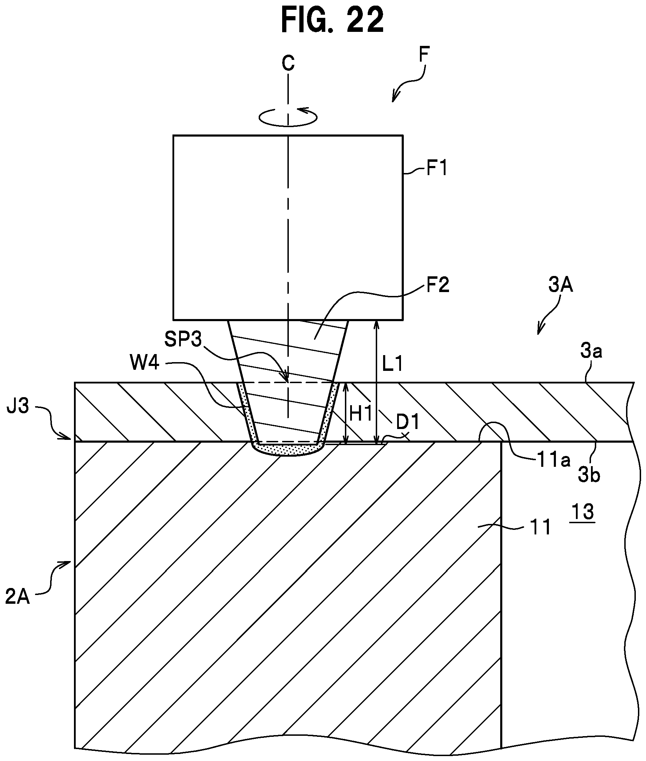

As shown in FIG. 22, the insertion step of the present method is a step of inserting the rotating tool F into the joined members (jacket main body 2A and sealing body 3A). More specifically, the insertion step of the present method is a step of inserting the rotating tool F from the front surface 3a of the sealing body 3A toward the overlaying portion J3 of the jacket main body 2A and the sealing body 3A. In the insertion step, the rotating tool F is rotated (reverse-rotated) in the same direction as the formation direction of the helical groove provided in the stirring pin F2, and is inserted toward the overlaying portion J3. In the insertion step of the present embodiment, the insertion depth H1 is set within such a range that the stirring pin F2 comes into contact with the sealing body 3A and also comes into contact with the end surface 11a of the peripheral wall portion 11. In the insertion step, the insertion depth H1 may be set within such a range that only the stirring pin F2 comes into contact with the sealing body 3A and the jacket main body 2A and the shoulder portion F1 does not come into contact with the front surface 3a of the sealing body 3A. The materials of the jacket main body 2A and the sealing body 3A are friction-stirred by the insertion step, and the plasticized region W4 is formed. In this case, the plasticized region W4 is formed across the overlaying portion J3 in a form in contact with the jacket main body 2A and the sealing body 3A.

Other points of the insertion step are the same as those in the above-mentioned second embodiment. Moreover, the lifting step, the change step, the press-in step, and the joining step are also the same as those in the above-mentioned second embodiment.

When the forward-rotated stirring pin is inserted toward the overlaying portion J3 formed by the end surface 11a of the jacket main body 2A and the back surface 3b of the sealing body 3, the interface near the position where the stirring pin is inserted is taken into the plastic flow and moves upward, and this reduces the joining strength of the overlaying portion J3 in some cases. Moreover, since an amount of the joined members plasticized and fluidized to cause convection increases depending on the insertion amount of the stirring pin, the convection of the joined members plasticized and fluidized with the inserting of the stirring pin increases, and the take-in near the interface becomes more likely to occur. This reduces the joining strength of the overlaying portion J3 in some cases.

According to the present method, in the insertion step, the stirring pin F2 is inserted toward the overlaying portion J3 in the state where the rotating tool F is rotated (reverse-rotated) in the same direction as the formation direction of the helical groove. This generates the upward convection in the inner portion of the plasticized region W4 located around the stirring pin, and generates the downward convection in the outer portion of the plasticized region W4. Accordingly, the oxidation coating present at the interface of the jacket main body 2A and the sealing body 3A is more likely to be prevented from being taken in and moving upward, near the start position SP3 of the overlaying portion J3. Moreover, according to the present method, when the stirring pin F2 is inserted, the joined members are actively discharged to the outside with the inserting of the stirring pin. This can reduce the amount of the joined members plasticized and fluidized to cause convection. This makes it more likely for the oxidization film present at the interface of the jacket main body 2 and the sealing body 3 to be prevented from being taken in. Accordingly, in the present method, the decrease of the joining strength in the overlaying portion J3 of the jacket main body 2 and the sealing body 3 can be suppressed.

### Examples

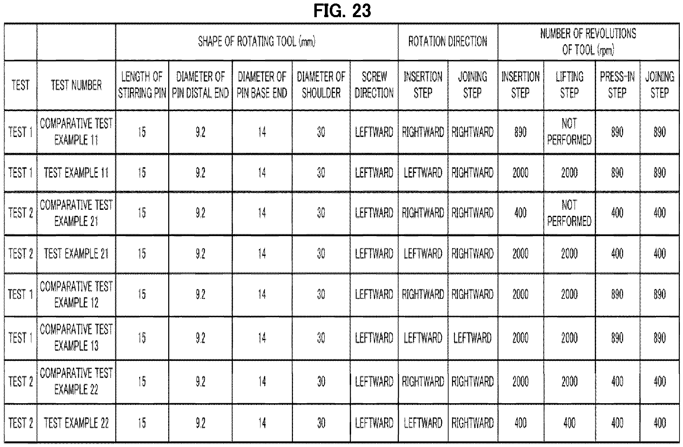

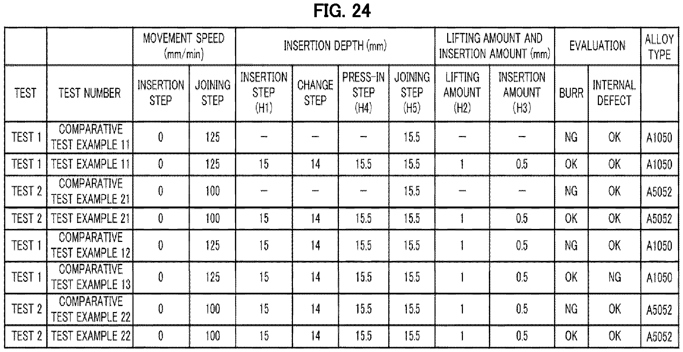

Test 1 and Test 2 were performed to check the effects of the present invention. Test 1 and Test 2 were not tests in which two members were joined to each other, and a state of friction stirring by the rotating tool F was checked by using one member. FIG. 23 is a table showing conditions of a shape and a rotation direction of the rotating tool and the number of revolutions of the tool in Test 1 and Test 2. FIG. 24 is a table showing a movement speed, an insertion depth, a lifting amount and an insertion amount, an evaluation, and an alloy type in Test 1 and Test 2.

### [Test 1]

In Test 1, a material under test (A1050) was prepared, and the friction stirring was performed at a predetermined distance by using the rotating tool F. The outer diameter of the shoulder portion F1 of the rotating tool F was 30 mm, the outer diameter of the base end of the stirring pin F2 was 14 mm, and the outer diameter of the distal end of the stirring pin F2 was 9.2 mm. The length L1 of the stirring pin F2 was 15 mm, and the helical groove was a left-handed helix. The joining speed was 125 mm/min.

### <Test Example 11>

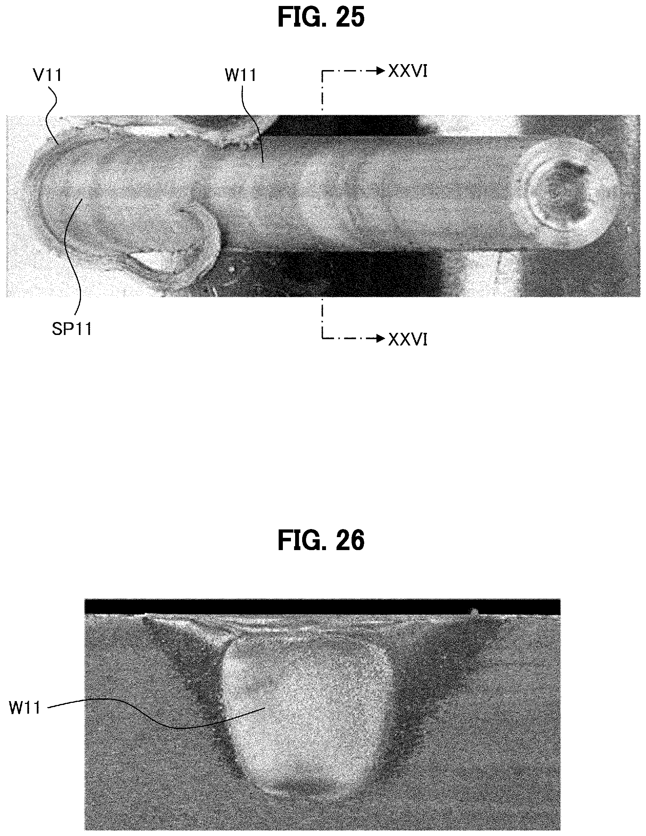

FIG. 25 is a plan view showing a friction stir state of Test Example 11. FIG. 26 is a cross-sectional view along the XXVI-XXVI line in FIG. 25. In Test Example 11, the rotating tool F including the stirring pin F2 in which the helical groove was the left-handed helix was inserted at a start position SP11 while being rotated leftward, was then lifted to change the rotation direction to the rightward rotation, and was pressed in, and subsequently the friction stirring was performed. In Test Example 11, the rotation speed of the rotating tool F in the inserting was 2,000 rpm, the rotation speed of the rotating tool F in the lifting was 2,000 rpm, the rotation speed of the rotating tool F in the press-in was 890 rpm, and the rotation speed of the rotating tool F in the friction stir welding was 890 rpm. Moreover, in Test Example 11, the insertion depth H1 in the inserting was 15 mm, the lifting amount H2 in the lifting was 1 mm, the insertion depth in the lifting (in the changing of the rotation direction) was 14 mm, the insertion amount H3 in the press-in was 0.5 mm, the insertion depth H4 after the press-in was 15.5 mm, and the insertion depth H5 in the friction stir welding was 15.5 mm. In Test Example 11, as shown in FIG. 25, a burr V11 at the start position SP11 was smaller than those in Comparative Test Examples 11 and 12. Moreover, as shown in FIG. 26, a tunnel shaped defect was absent in a plasticized region W11.

### <Comparative Test Example 11>

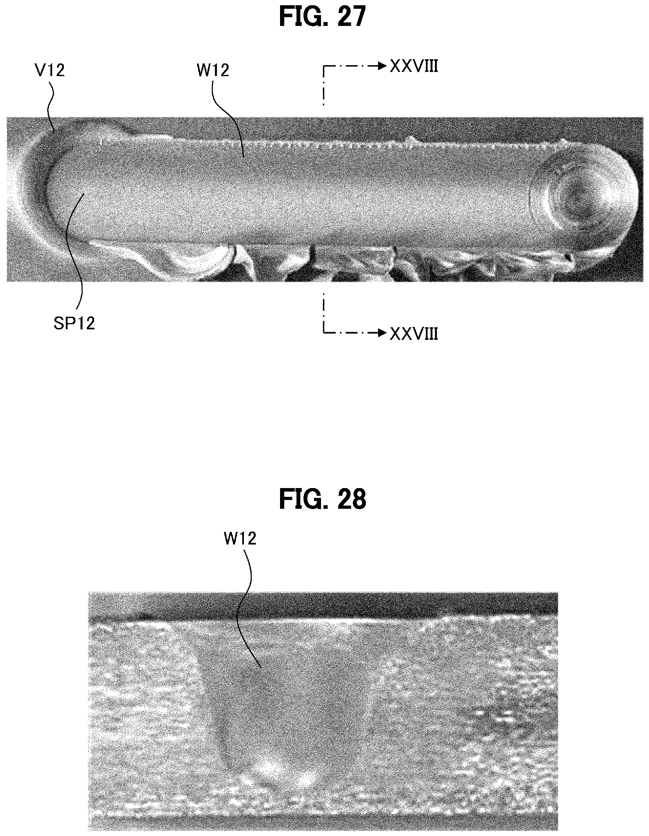

FIG. 27 is a plan view showing a friction stir state of Comparative Test Example 11. FIG. 28 is a cross-sectional view along the XXVIII-XXVIII line in FIG. 27. In Comparative Test Example 11, the rotating tool F including the stirring pin F2 in which the helical groove was the left-handed helix was inserted at a start position SP12 while being rotated rightward, and was then inserted to a depth at which the friction stir welding was to be performed, and the friction stirring was directly performed in the rightward rotation. The rotation speed of the rotating tool F in the inserting was 890 rpm, and the rotation speed of the rotating tool F in the friction stir welding was also 890 rpm. Moreover, the insertion depth in the inserting was 15.5 mm, and the insertion depth H5 in the friction stir welding was 15.5 mm. In Comparative Test Example 11, as shown in FIGs. 27 and 28, a tunnel shaped defect was absent in a plasticized region W12. However, as shown in FIG. 27, a large burr V12 was generated at the start position SP12.

### <Comparative Test Example 12>

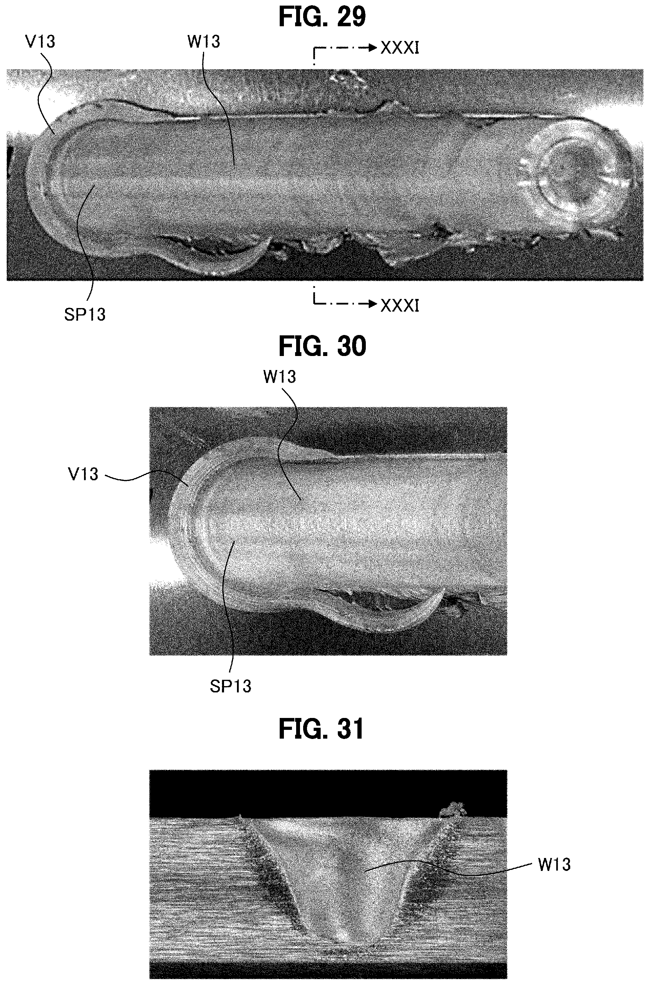

FIG. 29 is a plan view showing a friction stir state of Comparative Test Example 12. FIG. 30 is an enlarged plan view at a start position in FIG. 29. FIG. 31 is a cross-sectional view along the XXXI-XXXI line in FIG. 29. In Comparative Test Example 12, the rotating tool F including the stirring pin F2 in which the helical groove was the left-handed helix was inserted at a start position SP13 while being rotated rightward, was then lifted, and was pressed in without changing the rotation direction, and subsequently the friction stirring was directly performed in the rightward rotation. In Comparative Test Example 12, the test was performed with the rotation speed of the rotating tool F in the inserting, the rotation speed of the rotating tool F in the lifting, the rotation speed of the rotating tool F in the press-in, the rotation speed of the rotating tool F in the friction stir welding, the insertion depth H1 in the inserting, the lifting amount H2 in the lifting, the insertion depth in the lifting, the insertion amount H3 in the press-in, the insertion depth H4 after the press-in, and the insertion depth H5 in the friction stir welding being the same as those in Test Example 11. In Comparative Test Example 12, as shown in FIG. 31, a tunnel shaped defect was absent in a plasticized region W13. However, as shown in FIGs. 29 and 30, a large burr V13 was generated at the start position SP13.

### <Comparative Test Example 13>

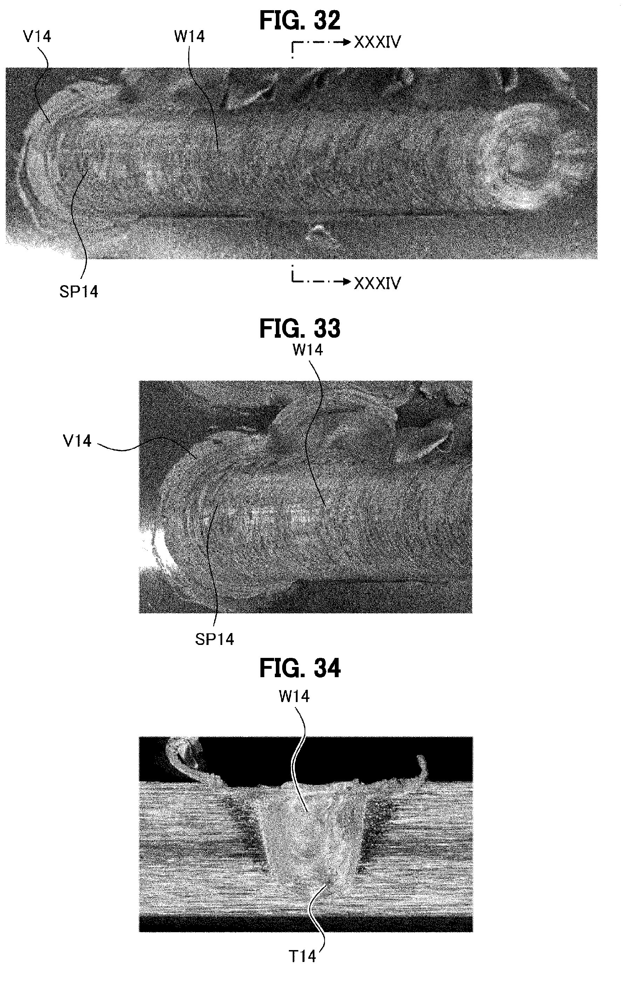

FIG. 32 is a plan view showing a friction stir state of Comparative Test Example 13. FIG. 33 is an enlarged plan view at a start position in FIG. 32. FIG. 34 is a cross-sectional view along the XXXIV-XXXIV line in FIG. 32. In Comparative Test Example 13, the rotating tool F including the stirring pin F2 in which the helical groove was the left-handed helix was inserted at a start position SP14 while being rotated leftward, was then lifted, and was pressed in without changing the rotation direction, and subsequently the friction stirring was directly performed in the leftward rotation. In Comparative Test Example 13, the test was performed with the rotation speed of the rotating tool F in the inserting, the rotation speed of the rotating tool F in the lifting, the rotation speed of the rotating tool F in the press-in, the rotation speed of the rotating tool F in the friction stir welding, the insertion depth H1 in the inserting, the lifting amount H2 in the lifting, the insertion depth in the lifting, the insertion amount H3 in the press-in, the insertion depth H4 after the press-in, and the insertion depth H5 in the friction stir welding being the same as those in Test Example 1. In Comparative Test Example 13, as shown in FIGs. 32 and 33, a burr V14 at the start position SP14 was smaller than those in Comparative Test Examples 11 and 12. However, as shown in FIG. 34, a tunnel shaped defect T14 was generated in a plasticized region W14.

### [Test 2]

In Test 2, a material under test (A5052) was prepared, and the friction stirring was performed at a predetermined distance by using the rotating tool F. The dimensions of the portions of the rotating tool F were the same as those in Test 1. The helical groove of the stirring pin F2 was a left-handed helix. The joining speed was 100 mm/min.

### <Test Example 21>

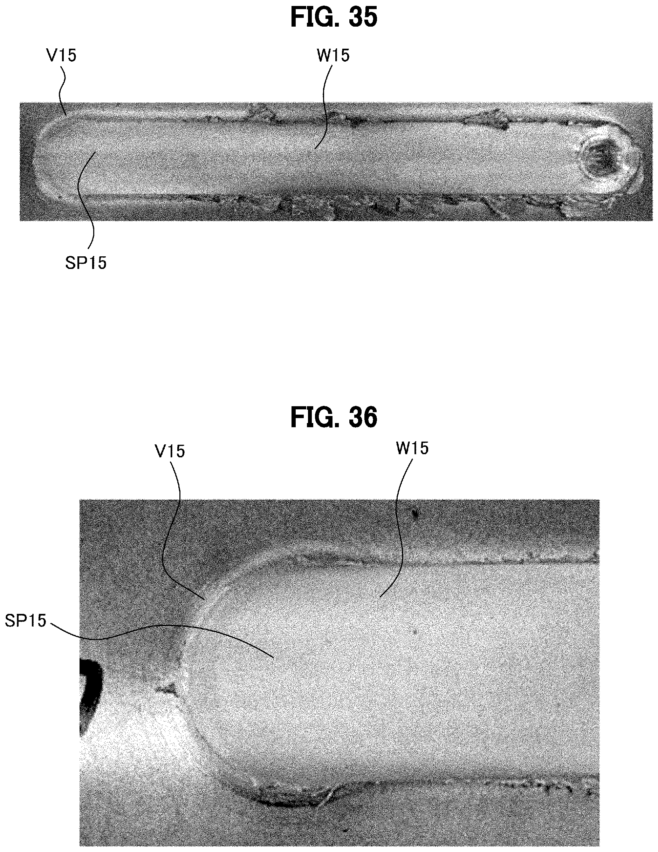

FIG. 35 is a plan view showing a friction stir state of Test Example 21. FIG. 36 is an enlarged plan view at a start position in FIG. 35. In Test Example 21, the rotating tool F including the stirring pin F2 in which the helical groove was the left-handed helix was inserted at a start position SP15 while being rotated leftward, was then lifted to change the rotation direction to the rightward rotation, and was pressed in, and subsequently the friction stirring was performed. The rotation speed of the rotating tool F in the inserting was 2,000 rpm, the rotation speed of the rotating tool F in the lifting was 2,000 rpm, the rotation speed of the rotating tool F in the press-in was 400 rpm, and the rotation speed of the rotating tool F in the friction stirring was 400 rpm. Moreover, in Test Example 21, the insertion depth H1 in the inserting was 15 mm, the lifting amount H2 in the lifting was 1 mm, the insertion depth in the changing of the rotation direction was 14 mm, the insertion amount H3 in the press-in was 0.5 mm, the insertion depth H4 after the press-in was 15.5 mm, and the insertion depth H5 in the friction stir welding was 15.5 mm. In Test Example 21, as shown in FIGs. 35 and 36, a burr V15 at the start position SP15 was smaller than those in Comparative Test Examples 21 and 22.

### <Test Example 22>

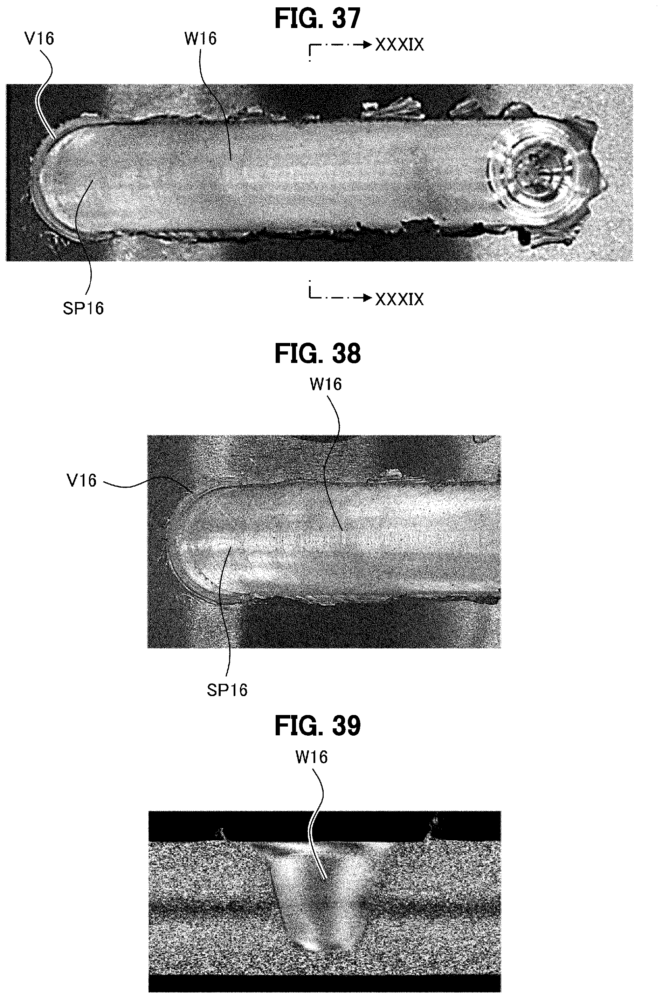

FIG. 37 is a plan view showing a friction stir state of Test Example 22. FIG. 38 is an enlarged plan view at a start position in FIG. 37. FIG. 39 is a cross-sectional view along the XXIX-XXIX line in FIG. 37. In Test Example 22, the rotating tool F including the stirring pin F2 in which the helical groove was the left-handed helix was inserted at a start position SP16 while being rotated leftward, was then lifted to change the rotation direction to the rightward rotation, and was pressed in, and subsequently the friction stirring was performed. In Test Example 22, the test was performed as in Test Example 21 except for changing the rotation speed of the rotating tool F in the inserting to 400 rpm and changing the rotation speed of the rotating tool F in the lifting to 400 rpm. As shown in FIGs. 37 and 38, a burr V16 at the start position SP16 was smaller than those in Comparative Test Examples 21 and 22. Moreover, no defect was found in the plasticized region W16 as shown in FIG. 39.

### <Comparative Test Example 21>

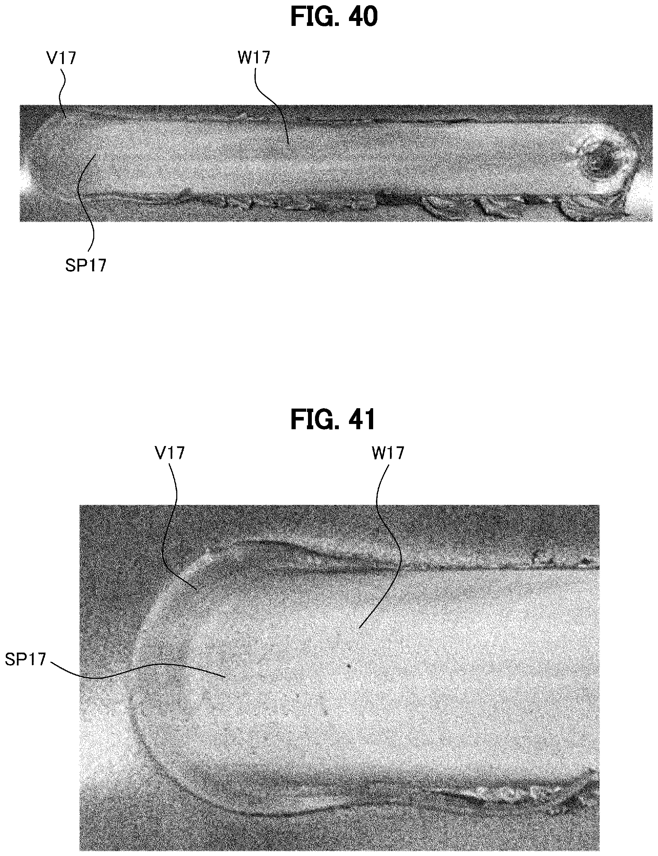

FIG. 40 is a plan view showing a friction stir state of Comparative Test Example 21. FIG. 41 is an enlarged plan view at a start position in FIG. 40. In Comparative Test Example 21, the rotating tool F including the stirring pin F2 in which the helical groove was the left-handed helix was inserted at a start position SP17 while being rotated rightward, was then inserted to a depth at which the friction stir welding was to be performed, and the friction stirring was directly performed in the rightward rotation. In Comparative Test Example 21, the rotation speed of the rotating tool F in the inserting was 400 rpm, and the rotation speed of the rotating tool F in the friction stir welding was 400 rpm. Moreover, in Comparative Test Example 21, the insertion depth in the inserting was 15.5 mm, and the insertion depth H5 in the friction stir welding was 15.5 mm. In Comparative Test Example 21, as shown in FIGs. 40 and 41, a large burr V17 was generated at the start position SP17.

### <Comparative Test Example 22>

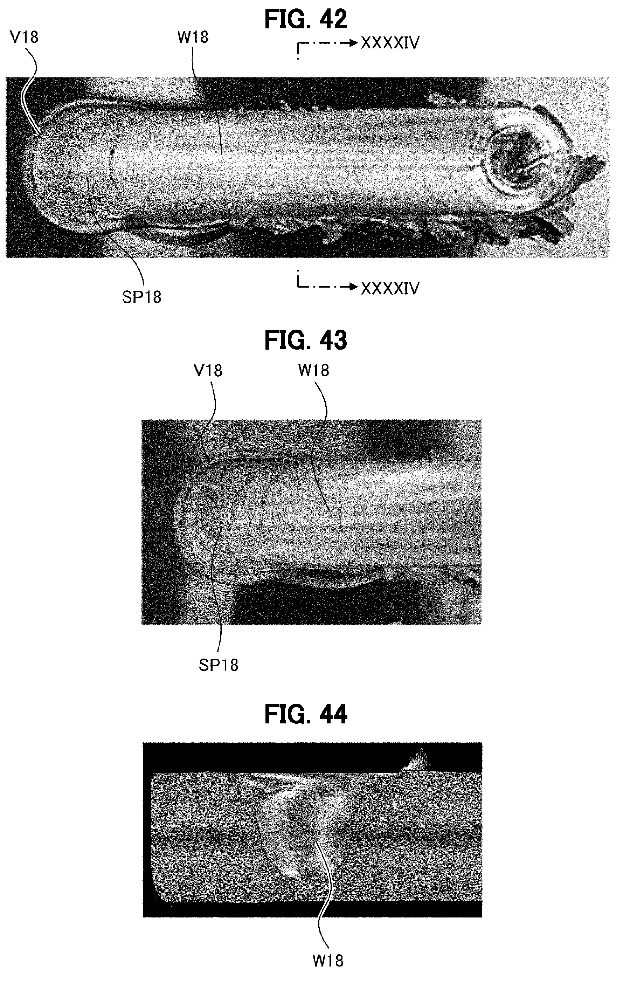

FIG. 42 is a plan view showing a friction stir state of Comparative Test Example 22. FIG. 43 is an enlarged plan view at a start position in FIG. 42. FIG. 44 is a cross-sectional view along the XXXXIV-XXXXIV line in FIG. 42. In Comparative Test Example 22, the rotating tool F including the stirring pin F2 in which the helical groove was the left-handed helix was inserted at a start position SP18 while being rotated rightward, was then lifted, and was pressed in without changing the rotation direction, and subsequently the friction stirring was directly performed in the rightward rotation. In Comparative Test Example 22, the test was performed with the rotation speed of the rotating tool F in the inserting, the rotation speed of the rotating tool F in the lifting, the rotation speed of the rotating tool F in the press-in, the rotation speed of the rotating tool F in the friction stir welding, the insertion depth H1 in the inserting, the lifting amount H2 in the lifting, the insertion depth in the lifting, the insertion amount H3 in the press-in, the insertion depth H4 after the press-in, and the insertion depth H5 in the friction stir welding being the same as those in Test Example 21. In Comparative Test Example 2, as shown in FIG. 44, a tunnel shaped defect was absent in a plasticized region W18. However, as shown in FIGs. 42 and 43, a large burr V18 was generated at the start position SP18.

As explained above, it is found that, when the rotating tool F is inserted while being forward-rotated (rotated rightward when the helical groove is a left-handed helix and rotated leftward when the helical groove is a right-handed helix) at the start positions SP12, SP13, SP17, and SP18 as in Comparative Test Examples 11, 12, 21, and 22, the large burrs V12, V13, V17, and V18 are generated at the start positions SP12, SP13, SP17, and SP18, respectively.

Meanwhile, it is found that, when the rotating tool F is inserted while being reverse-rotated (rotated leftward when the helical groove is a left-handed helix and rotated rightward when the helical groove is a right-handed helix) at the start positions SP11, SP15, and SP16 as in Test Examples 11, 21, and 22 and then the friction stirring is performed in the forward rotation, the burrs V11, V15, and V16 become smaller at the start positions SP11, SP15, and SP16, respectively.

Moreover, it is found that, when the rotating tool F is reverse-rotated (rotated leftward when the helical groove is a left-handed helix and rotated rightward when the helical groove is a right-handed helix) in the friction stir welding as in Comparative Test Example 13, the tunnel shaped defect T14 is generated.

Meanwhile, it is found that, when the rotating tool F is inserted while being forward-rotated (rotated rightward when the helical groove is a left-handed helix and rotated leftward when the helical groove is a right-handed helix) in the friction stir welding as in Test Examples 11, 21, and 22, a joining condition is good.

Specifically, it is found that performing the reverse rotation in the inserting (insertion step) and performing the forward rotation in the friction stir welding (joining step) as in the present invention can reduce the burr at the start position and eliminate defects in the friction stir welding.

### Reference Signs List

1 liquid-cooling jacket (joined body)
2 jacket main body (first joined member)
3 sealing body (second joined member)
F rotating tool
F2 stirring pin
G rotating tool
G1 base portion
G2 base-end-side pin
G3 distal-end-side pin
J1 first butting portion (butting portion)
J2 second butting portion (butting portion)
J3 overlaying portion
H1, H4, H5 insertion depth
H2 lifting amount
H3 insertion amount
K rotating tool
K1 base portion
K2 stirring pin
N1, N2 number of revolutions
L1 length of stirring pin
R1, R2, R3 movement route
SP1, SP2, SP3 start position
EP1, EP3 end position
W plasticized region

## Claims

1. A method for manufacturing a joined body by performing friction stir welding on a joined member while using a rotating tool including a stirring pin in which a helical groove is formed, the method comprising, in the following order:
an insertion step of inserting the stirring pin into the joined member in a state where the rotating tool is rotated in the same direction as a formation direction of the helical groove;
a change step of changing a rotation direction of the rotating tool such that the rotating tool is rotated in an opposite direction to the formation direction of the helical groove; and
a joining step of joining the joined member in a state where the rotating tool is rotated in the opposite direction to the formation direction of the helical groove.

2. The method for manufacturing the joined body according to claim 1, wherein a number of revolutions of the rotating tool in the insertion step is equal to or higher than a number of revolutions of the rotating tool in the joining step.

3. The method for manufacturing the joined body according to claim 2, wherein a relationship between the number N1 of revolutions of the rotating tool in the insertion step and the number N2 of revolutions of the rotating tool in the joining step is N2≤N1≤N2×5.

4. The method for manufacturing the joined body according to claim 1, further comprising a lifting step of lifting the rotating tool in a front surface direction of the joined member after the insertion step, wherein
the change step is performed after the lifting step.

5. The method for manufacturing the joined body according to claim 4, wherein a relationship between an insertion depth H1 of the rotating tool in the insertion step and a lifting amount H2 in the lifting step is H1×0.01≤H2≤H1×0.5.

6. The method for manufacturing the joined body according to claim 1, further comprising a press-in step of pressing the rotating tool in a depth direction of the joined member after the change step, wherein
the joining step is performed after the press-in step.

7. The method for manufacturing the joined body according to claim 6, wherein a relationship between an insertion depth H1 of the rotating tool in the insertion step and an insertion amount H3 in the press-in step is H1×0.01≤H3≤H1×0.5.

8. The method for manufacturing the joined body according to claim 6, wherein a relationship between an insertion depth H1 of the rotating tool in the insertion step and an insertion depth H4 at start of joining in the joining step is H1×1.01≤H4≤H1×1.5.

9. The method for manufacturing the joined body according to claim 1, wherein
the rotating tool further includes a shoulder portion that is provided with a lower end surface with a flat shape or a mortar shape and that has a column shape or a frustum shape,
the stirring pin extends downward from the lower end surface of the shoulder portion, and
the friction stir welding on the joined member is performed in a state where the shoulder portion is brought into contact with the joined member and the stirring pin is inserted into the joined member.

10. The method for manufacturing the joined body according to claim 9, wherein a relationship between an insertion depth H1 of the rotating tool in the insertion step and a length L1 of the stirring pin is L1×0.5≤H1≤L1.

11. The method for manufacturing the joined body according to claim 1, wherein
the rotating tool includes a base portion with a column shape or a frustum shape,
the stirring pin extends downward from a lower end surface of the base portion, and
the friction stir welding is performed on the joined member in a state where the base portion is separated from the joined member and only the stirring pin is inserted into the joined member.

12. The method for manufacturing the joined body according to claim 1, wherein
the rotating tool includes a base portion with a column shape or a frustum shape,
the stirring pin includes a base-end-side pin continuous with the base portion and a distal-end-side pin continuous with the base-end-side pin, a taper angle of the base-end-side pin is larger than a taper angle of the distal-end-side pin, and a pin step portion with a step shape is formed on an outer peripheral surface of the base-end-side pin, and
the friction stir welding on the joined member is performed in a state where the outer peripheral surface of the base-end-side pin is in contact with a front surface of the joined member.

13. The method for manufacturing the joined body according to claim 1, further comprising a prepared hole forming step of forming a prepared hole in the joined member before the insertion step, wherein
the stirring pin is inserted into the prepared hole in the insertion step.

14. The method for manufacturing the joined body according to claim 1, wherein
the joined member includes a first joined member and a second joined member with a lower hardness than the first joined member,
an end surface of at least one of the first joined member and the second joined member is made to butt to form a butting portion, or a back surface of the second joined member is laid over a front surface of the first joined member to form an overlaying portion,
the stirring pin is inserted from the front surface of the first joined member in the insertion step, and
the friction stir welding of the butting portion or the overlaying portion is performed in the joining step.

15. The method for manufacturing the joined body according to claim 1, wherein
the joined member includes a first joined member and a second joined member,
an end surface of at least one of the first joined member and the second joined member is made to butt to form a butting portion, or a back surface of the second joined member is laid over a front surface of the first joined member to form an overlaying portion, and
the stirring pin is inserted toward the butting portion or the overlaying portion in the insertion step.
